(19) Europäisches Patentamt
European Patent Office
Office européen des brevets

(11) **EP 4 428 494 B1**

(12) **EUROPEAN PATENT SPECIFICATION**

(45) Date of publication and mention
of the grant of the patent:
**20.05.2026 Bulletin 2026/21**

(21) Application number: **23838506.6**

(22) Date of filing: **27.04.2023**

(51) International Patent Classification (IPC):
*G01C 21/30* (2006.01)    *G01S 19/39* (2010.01)
*G06F 17/18* (2006.01)    *G06N 20/00* (2019.01)
*H04W 64/00* (2009.01)    *G01S 19/49* (2010.01)

(52) Cooperative Patent Classification (CPC):
**H04W 64/006; G01C 21/30; G01S 19/396;**
**G06F 17/18; G06N 20/00;** G01S 19/49

(86) International application number:
**PCT/CN2023/091078**

(87) International publication number:
**WO 2024/012006 (18.01.2024 Gazette 2024/03)**

(54) **POSITIONING PRECISION ESTIMATION METHOD AND APPARATUS, ELECTRONIC DEVICE AND STORAGE MEDIUM**

VERFAHREN UND VORRICHTUNG ZUR SCHÄTZUNG DER POSITIONIERUNGSPRÄZISION, ELEKTRONISCHE VORRICHTUNG UND SPEICHERMEDIUM

PROCÉDÉ ET APPAREIL D'ESTIMATION DE PRÉCISION DE POSITIONNEMENT, DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.07.2022 CN 202210837512**

(43) Date of publication of application:
**11.09.2024 Bulletin 2024/37**

(73) Proprietor: **Tencent Technology (Shenzhen) Company Limited**
**Shenzhen, Guangdong, 518057 (CN)**

(72) Inventors:
• **ZHANG, Xin**
**Shenzhen, Guangdong 518057 (CN)**
• **YANG, Zhanduo**
**Shenzhen, Guangdong 518057 (CN)**
• **ZHOU, Yanxing**
**Shenzhen, Guangdong 518057 (CN)**
• **LI, Xin**
**Shenzhen, Guangdong 518057 (CN)**
• **ZHENG, Weizhi**
**Shenzhen, Guangdong 518057 (CN)**
• **LIU, Chang**
**Shenzhen, Guangdong 518057 (CN)**

(74) Representative: **Novagraaf International SA**
**Chemin de l'Echo 3**
**1213 Onex, Geneva (CH)**

(56) References cited:
CN-A- 108 871 336     CN-A- 111 538 232
CN-A- 111 624 634     CN-A- 111 767 354
CN-A- 112 505 737     CN-A- 112 762 933
US-A1- 2019 186 925    US-A1- 2019 204 092
US-A1- 2020 049 837    US-A1- 2020 111 011
US-A1- 2021 089 572    US-A1- 2021 097 148

**Description**

RELATED APPLICATION

This disclosure claims priority to Chinese Patent Application No. 202210837512.8, entitled "METHOD FOR ESTIMATING POSITIONING PRECISION ERROR AND APPARATUS, ELECTRONIC DEVICE, AND STORAGE MEDIUM" filed with the China National Intellectual Property Administration on July 15, 2022.

FIELD OF THE TECHNOLOGY

This disclosure relates to the intelligent transportation field, and more specifically, to a method for estimating positioning precision error and apparatus, a device, and a storage medium.

BACKGROUND OF THE DISCLOSURE

Intelligence is one of main lines of current development of vehicles. Progress of vehicle intelligence relies on maturity of vehicle sensors, algorithm software, and decision-making platforms. A combination of high-precision positioning and a high-definition map can provide accurate absolute location information for a vehicle. The absolute location information and relative location information of a sensor complement each other, to improve safety of intelligent driving. With continuous improvement of vehicle intelligence, importance of high-precision positioning becomes increasingly prominent.

Precision error assessment is a quite important part of high-precision positioning. A precision error of positioning is a possible error included in this positioning, and can be quite helpful for subsequent vehicle control, collision avoidance, intelligent vehicle speeds, path planning, and behavioral decision-making. However, currently, no solution is capable of effectively assessing a precision error of high-precision positioning.

US 2020/049837 A1 describes a system for estimating device location includes at least one processor configured to receive an estimated position based on a positioning system comprising a Global Navigation Satellite System (GNSS) satellite, and receive a set of parameters associated with the estimated position.

US 2020/111011 A1 describes a method for providing predictive classification of sensor error, including: receiving sensor data from at least one sensor, the sensor data collected at a geographic location; extracting a set of input features from the sensor data, map data representing the geographic location, or combination thereof; processing the set of input features using a machine learning model to calculate a predicted sensor error of a target sensor operating at the geographic location.

US 2019/204092 A1 provides an autonomous vehicle performing localization to determine the current location of the vehicle using different localization techniques as the vehicle drives. The localization technique used by the autonomous vehicle is selected from a localization variant index that stores mapping from a driving context to localization variant, each localization variant identifying a localization technique.

SUMMARY

The invention is set out in the claims annexed hereto.

BRIEF DESCRIPTION OF THE DRAWINGS

FIG. 1 is a schematic diagram of a system architecture according to an embodiment of this disclosure.

FIG. 2 is a schematic flowchart of a model training method according to an embodiment of this disclosure.

FIG. 3 is a schematic diagram of a network architecture to which embodiments of this disclosure are applicable.

FIG. 4 is a schematic flowchart of a method for obtaining training sample data according to an embodiment of this disclosure.

FIG. 5 is a schematic flowchart of a method for estimating positioning precision error according to an embodiment of this disclosure.

FIG. 6 is a specific example of a method for estimating positioning precision error according to an embodiment of this disclosure.

FIG. 7 is a schematic block diagram of an apparatus for estimating positioning precision error according to an embodiment of this disclosure.

FIG. 8 is a schematic block diagram of an apparatus for training a precision-error estimation model according to an embodiment of this disclosure.

FIG. 9 is a schematic block diagram of an electronic device according to an embodiment of this disclosure.

DESCRIPTION OF EMBODIMENTS

The technical solutions in embodiments of this disclosure are clearly and completely described in the following with reference to the accompanying drawings in embodiments of this disclosure. Apparently, the described embodiments are merely some rather than all of embodiments of this disclosure. All other embodiments obtained by a person of ordinary skill in the art based on embodiments of this disclosure without creative efforts shall fall within the protection scope of this disclosure.

It is to be understood that "B corresponding A" in embodiments of this disclosure indicates that B is associated with A. In an implementation, B may be determined based on A. However, it is further to be understood that determining B based on A does not mean that B is determined only based on A, but B may be alternatively determined based on A and/or other information.

In descriptions of this disclosure, "at least one" means one or more, and "a plurality of" means two or more, unless otherwise specified. In addition, "and/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items" or a similar expression indicates any combination of the items, including one of the items or any combination of a plurality of the items. For example, at least one of a, b, or c may indicate a, b, c, a and b, a and c, b and c, or a, b, and c, where a, b, and c may be singular or plural.

It is further to be understood that descriptions such as "first" and "second" in embodiments of this disclosure are merely intended to describe and distinguish between objects, but do not indicate an order or constitute a particular limitation on the number of devices in embodiments of this disclosure, and shall not be construed as a limitation on embodiments of this disclosure.

It is further to be understood that particular features, structures, or characteristics related to an embodiment in this specification are included in at least one embodiment of this disclosure. In addition, these particular features, structures, or characteristics may be combined in one or more embodiments in any appropriate manner.

In addition, the terms "comprise", "include", and any variants thereof are intended to cover a non-exclusive inclusion. For example, a process, method, system, product, or server that includes a list of steps or units is not necessarily limited to those steps or units that are expressly listed, but may include other steps or units that are not expressly listed or are inherent to the process, method, system, product, or device.

Embodiments of this disclosure are applied to the field of artificial intelligence (AI) technologies.

AI involves a theory, a method, a technology, and an application system that use a digital computer or a machine controlled by a digital computer to simulate, extend, and expand human intelligence, perceive an environment, obtain knowledge, and use the knowledge to obtain an optimal result. In other words, AI is a comprehensive technology in computer science and attempts to understand the essence of intelligence and produce a new intelligent machine that can react in a manner similar to human intelligence. AI is to study design principles and implementation methods of various intelligent machines, to enable the machines to have functions of perception, reasoning, and decision-making.

The AI technology is a comprehensive discipline, and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

With research and development of AI technologies, AI technologies have been studied and applied in many fields, for example, common fields such as smart household, smart wearable devices, virtual assistants, smart speakers, smart marketing, self-driving, autonomous driving, drones, robots, smart healthcare, and intelligent customer service. It is believed that AI technologies are to be applied in more fields and play an increasingly important part with development of technologies.

Embodiments of this disclosure may relate to an autonomous driving technology in AI technologies. Depending on collaboration of AI, computer vision, a radar, a monitoring apparatus, and a global positioning system, the autonomous driving technology enables a computer to autonomously and safely operate a motor vehicle without any active operation performed by a person. The autonomous driving technology usually includes a high-definition map, environmental perception, behavioral decision-making, path planning, motion control, and other technologies. The autonomous driving technology has an extensive application prospect. Specifically, technical solutions provided in embodiments of this disclosure relate to a technology for assessing a positioning precision error, which may be specifically used for assessing positioning precision of autonomous driving.

Embodiments of this disclosure may also relate to machine learning (ML) in AI technologies. ML is a multi-field interdiscipline, and relates to a plurality of disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, so as to keep improving its performance. ML is the core of AI, is a basic way to make the computer intelligent, and is applied to various fields of AI. ML and deep learning generally include technologies such as an artificial neural network, a belief network, reinforcement learning, transfer learning, inductive learning, and learning from demonstrations.

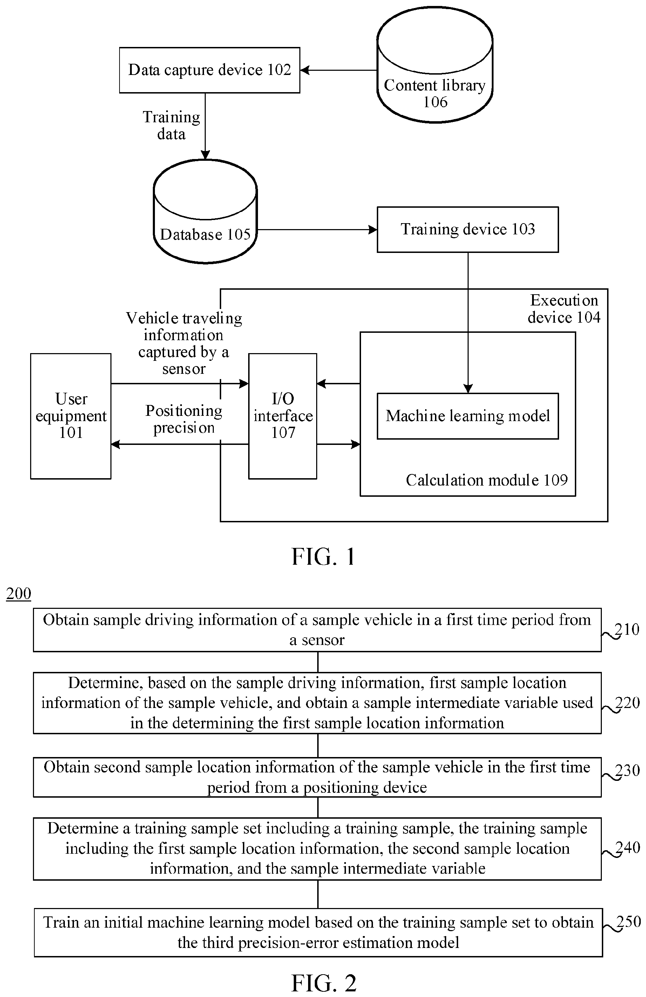

FIG. 1 is a schematic diagram of a system architecture according to an embodiment of this disclosure. As shown in FIG. 1, the system architecture may include user equipment 101, a data capture device 102, a training device 103, an execution device 104, a database 105, and a content library 106.

The data capture device 102 is configured to read training data from the content library 106, and store the read training data to the database 105. Training data included in embodiments of this disclosure includes location information #1 and location information #2 of a sample vehicle and an intermediate variable used in a process of determining the location information #1. The location information #1 is determined based on driving information of the sample vehicle that is captured by a sensor. The location information #2 is location information of the sample vehicle that is captured by a positioning device.

The training device 103 trains a machine learning model based on training data maintained in the database 105, so that a trained machine learning model can effectively assess positioning precision. The machine learning model obtained by the training device 103 may be applied to different systems or devices.

In addition, as shown in FIG. 1, the execution device 104 is equipped with an I/O interface 107 for exchanging data with an external device, for example, receiving, through the I/O interface, vehicle driving information that is captured by a sensor and that is transmitted by the user equipment 101. A calculation module 109 in the execution device 104 obtains positioning precision for the vehicle based on the driving information and the trained machine learning model. The machine learning model may transmit a corresponding result to the user equipment 101 through the I/O interface.

The user equipment 101 may include a smart vehicle, an in-vehicle terminal, a mobile phone, a tablet computer, a notebook computer, a palmtop computer, a mobile Internet device (MID), or another terminal device.

The execution device 104 may be a server.

For example, the server may be a computing device such as a rack server, a blade server, a tower server, or a cabinet server. The server may be an independent test server or a test server cluster including a plurality of test servers.

There may be one or more servers. In the case of a plurality of servers, at least two servers are configured to provide different services, and/or at least two servers are configured to provide a same service, for example, provide the same service in a load balancing manner. This is not limited in embodiments of this disclosure.

The server may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. Alternatively, the server may become a node of a blockchain.

In this embodiment, the execution device 104 is connected to the user equipment 101 through a network. The network may be a wireless or wired network, for example, an intranet, the Internet, a Global System for Mobile Communications (GSM) network, a wideband code division multiple access (WCDMA) network, a 4G network, a 5G network, a Bluetooth network, a Wi-Fi network, or a call network.

FIG. 1 is only a schematic diagram of a system architecture according to an embodiment of this disclosure, and a location relationship between the devices, the components, the modules, and the like shown in the figure does not constitute any limitation. In some embodiments, the data capture device 102, the user equipment 101, the training device 103, and the execution device 104 may be the same device. The database 105 may be distributed on one or more servers, and the content library 106 may be distributed on one or more servers.

Related terms in embodiments of this disclosure are described below.

High-precision positioning: High-precision positioning generally refers to positioning with decimeter-level, centimeter-level, or even higher-level precision, is capable of providing a high-precision positioning result for a vehicle, and is one of indispensable core technologies for safe driving in autonomous driving, remote driving, and the like. The high-precision positioning plays an important role in aspects of horizontal/vertical accurate positioning for a vehicle, obstacle detection and collision avoidance, smart vehicle speed control, path planning, behavioral decision-making, and the like.

In the high-precision positioning, an absolute location of a vehicle can be accurately determined based on a high-precision absolute reference system. For example, the high-precision absolute reference system is a high-definition map. A map layer of the high-definition map includes a large number of road attribute elements with centimeter-level precision, including but not limited to road edges, lane edges, center lines, and other information. During driving of the vehicle, accurate navigation may be performed based on information in the high-definition map.

Multi-source fusion positioning: a technology that integrates a plurality of positioning technologies based on an information fusion policy and is capable of integrating related positioning means including satellite positioning, wireless communication signal positioning, sensor positioning, and the like to obtain a better fusion positioning result than a single positioning solution. High-precision positioning can be implemented through multi-source fusion positioning.

The satellite positioning is a technology for positioning by using a satellite (for example, GNSS). The wireless communication signal positioning is a technology for positioning by using a wireless communication signal (for example, a Wi-Fi signal or an ultra wideband (UWB) signal). The sensor positioning is a technology for positioning by using information captured by a sensor (for example, a visual sensor, a vehicle speed sensor, or an inertial measurement unit (IMU) sensor).

Visual positioning: a technology for positioning by using information captured by a visual sensor. In the visual positioning, road attribute elements at a positioning layer of a high-definition map may be recognized and sensed by the visual sensor, and vehicle location information is calculated based on a visual algorithm. In the visual positioning, sensors such as the high-definition map and a camera may be fully reused without additional deployment of hardware. This has significant advantages in costs.

Inertial positioning: a technology for positioning by using information captured by an IMU sensor. In the inertial positioning, angular rate and acceleration information of a vehicle is measured by the IMU sensor, and instantaneous speed and location information of a carrier is automatically calculated by using the Newton's law of motion. The inertial positioning has characteristics of not relying on external information, not radiating energy to the outside world, not being interfered with, and good concealment.

Global navigation satellite system (GNSS): a general navigation satellite system, including a global navigation satellite system, a regional navigation satellite system, and an enhanced navigation satellite system, for example, the Global Positioning System (GPS), GLONASS, Galileo of the Europe, the BeiDou navigation satellite system, and related enhanced systems such as the Wide Area Augmentation System (WAAS), the European Geostationary Navigation Overlay Service (EGNOS), and the Multi-functional Satellite Augmentation System (MSAS), and further including other navigation satellite systems that are being built or to be built in the future. The GNSS is a multi-system, multi-layer, and multi-mode complex combined system.

Usually, in ordinary satellite positioning, a plurality of satellite signals are received for determining a location. However, the satellite signals fluctuate when passing through an ionospheric layer or a tropospheric layer, causing an error. In this case, meter-level positioning precision is achieved. A ground enhanced base station may calculate a satellite positioning error by using a real-time kinematic (RTK) carrier-phase differential technology to further correct a location and improve positioning precision. For example, precision of satellite positioning may be enhanced from meters to centimeters.

In addition, in a case that an obstacle exists on the ground, a signal is likely to be weak or lost in satellite positioning. In this case, a vehicle may use inertial positioning, visual positioning, or another positioning function to ensure that a navigation system continues to operate.

RTK carrier-phase differential technology: a differential method for processing carrier phase observation values of two measuring stations in real time. A carrier phase captured by a reference station is transmitted to a user receiver for calculating a difference and resolving coordinates. In the RTK carrier-phase differential technology, centimeter-level positioning precision can be achieved outdoors in real time by using an RTK carrier-phase differential method. This provides a new measurement principle and method for engineering setting-out, topographic mapping, and various control surveys, and improves operation efficiency.

Precision error assessment is a quite important part of high-precision positioning. A precision error of positioning is a possible error included in this positioning, and can be quite helpful for subsequent vehicle control, collision avoidance, intelligent vehicle speeds, path planning, and behavioral decision-making. However, currently, no solution is capable of effectively assessing a precision error of high-precision positioning.

In view of this, embodiments of this disclosure provide a method for estimating positioning precision error and apparatus, a device, and a storage medium, to effectively assess a precision error of high-precision positioning.

Specifically, in embodiments of this disclosure, first driving information of a vehicle that is captured by a sensor may be obtained, first location information of the vehicle and a first intermediate variable used in a process of determining the first location information are obtained based on the first driving information, and then a target precision-error estimation model is determined from a pre-trained precision-error estimation model based on the first driving information and the first intermediate variable, and the first location information and the first intermediate variable are input to the target precision-error estimation model to obtain second location information of the vehicle and a precision error of the first location information relative to the second location information.

The precision-error estimation model is obtained by training a machine learning model based on a training sample set. A training sample in the training sample set includes location information of a sample vehicle and an intermediate variable used in a process of determining the location information. For example, the training sample set may include third location information and fourth location information of the sample vehicle and a second intermediate variable used in a process of determining the third location information. The third location information is determined based on sample driving information of the sample vehicle that is captured by a sensor in a first time period. The fourth location information includes location information of the sample vehicle that is captured by a positioning device in the first time period.

Therefore, in embodiments of this disclosure, the first location information of the vehicle and the first intermediate variable used in the process of determining the first location information can be obtained based on the first driving information, and then the target precision-error estimation model is determined from the pre-trained precision-error estimation model based on the first driving information and the first intermediate variable, and the first location information and the first intermediate variable are input to the target precision-error estimation model to obtain the second location information of the vehicle and the precision error of the first location information relative to the second location information. In this way, a precision error of high-precision positioning can be effectively assessed.

In embodiments of this disclosure, based on positioning location information of the vehicle that is determined based on the driving information of the vehicle captured by the sensor and an intermediate variable used in a process of determining the positioning location information, the precision-error estimation model can predict real location information of the vehicle that is captured by the positioning device, and estimate a precision error of the positioning location information relative to the real location information.

The method for estimating positioning precision error in embodiments of this disclosure may be divided into two stages: an offline modeling stage and an online estimation stage. In the offline modeling stage, a precision-error estimation model may be obtained through training based on captured data of a sample vehicle. In the online estimation stage, driving information of a vehicle may be captured in real time, and positioning precision for the vehicle is estimated based on the driving information and the precision-error estimation model built in the offline modeling stage.

The stages are described in detail below with reference to the accompanying drawings.

First, the offline modeling stage is described.

FIG. 2 is a schematic flowchart of a model training method 200 according to an embodiment of this disclosure. The method 200 may be performed by any electronic device with a data processing capability. For example, the electronic device may be implemented as a server or a terminal device. For another example, the electronic device may be implemented as the training device 103 shown in FIG. 1. This is not limited in this disclosure.

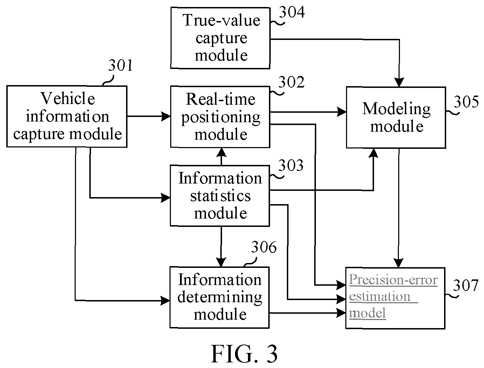

FIG. 3 is a schematic diagram of a network architecture to which embodiments of this disclosure are applicable. The network architecture includes a vehicle information capture module 301, a real-time positioning module 302, an information statistics module 303, a true-value capture module 304, a modeling module 305, an information determining module 306, and a precision-error estimation model 307. The vehicle information capture module 301, the real-time positioning module 302, the information statistics module 303, the true-value capture module 304, and the modeling module 305 may be used for model training in the offline modeling stage. The model training method 200 is described below with reference to FIG. 3.

As shown in FIG. 2, the method 200 includes steps 210 to 250.

210: Obtain sample driving information of a sample vehicle in a first time period from a sensor.

For example, the vehicle information capture module 301 in FIG. 3 may obtain the sample driving information of the sample vehicle that is captured by the sensor in the first time period. The first time period may be a current time period or a previous time period. This is not limited. After obtaining the sample driving information, the vehicle information capture module 301 may transmit the sample driving information to the real-time positioning module 302. In some embodiments, the sample driving information may be further transmitted to the information statistics module 303.

In some embodiments, the sample driving information is captured by at least one of an inertial measurement unit (IMU) sensor, a vehicle speed sensor, and a visual sensor.

For example, the sensor may be any sensor disposed on the sample vehicle for capturing vehicle driving information, for example, a GNSS sensor, the IMU sensor, the vehicle speed sensor, the visual sensor, or another sensor device.

For example, driving information of the sample vehicle that is captured by the GNSS sensor may include the following information about the sample vehicle in current positioning: a longitude, a latitude, a DOP value, a precision value, whether the current positioning is effective, and whether the current positioning is fixed.

The GNSS sensor is capable of properly receiving a GNSS signal in the case of no occlusion or weak occlusion (for example, on a road for normal driving). Therefore, the current positioning is effective. This may also be referred to as that the GNSS sensor is effective. The GNSS sensor is unable to properly receive a GNSS signal in the case of serious occlusion (for example, in a road section with a tunnel, an elevated highway, or a mountain). Therefore, the current positioning is ineffective. This may also be referred to as that the GNSS sensor is ineffective or fails.

A solution obtained by the GNSS sensor by using an RTK carrier-phase differential technology may be referred to as a fixed solution. In a case of that a GNSS signal for the GNSS sensor is blocked (for example, on a mountain road), another type of solution, for example, a floating-point solution, may be obtained when the RTK carrier-phase differential technology cannot be used. Whether the current positioning is fixed may indicate whether a fixed solution is obtained in the current positioning by using the RTK carrier-phase differential technology. Precision of the fixed solution is the highest, and can reach a centimeter level.

For example, driving information of the sample vehicle that is captured by the IMU sensor may include acceleration values in x-axis, y-axis, and z-axis directions of an accelerometer and angular velocities in x-axis, y-axis, and z-axis directions of a gyroscope.

For example, driving information of the sample vehicle that is captured by the vehicle speed sensor may include a direction and a magnitude of a vehicle speed of the sample vehicle.

For example, driving information of the sample vehicle that is captured by the visual sensor may include an equation for a lane line in which the sample vehicle is located, a type (for example, a real line, dashed line, a white line, or a yellow line) of the lane line, and coordinates of an obstacle.

220: Determine, based on the sample driving information, first sample location information of the sample vehicle, and obtain a sample intermediate variable used in the determining the first sample location information.

In an embodiment, the first sample location information may refer to a third location information of the sample vehicle; the sample intermediate variable may refer to a second intermediate variable. For example, the real-time positioning module 302 in FIG. 3 may obtain, based on the sample driving information, the third location information of the sample vehicle and the second intermediate variable used in the process of determining the third location information. After obtaining the third location information and the second intermediate variable, the real-time positioning module 302 may transmit the third location information and the second intermediate variable to the modeling module 305.

In some embodiments, the real-time positioning module 302 may obtain the sample driving information of the sample vehicle that is captured by the sensors from the vehicle information capture module 301, and may obtain the third location information of the sample vehicle in conjunction with other information. For example, the other information may include map information, for example, a high-definition map.

In some embodiments, the third location information may include a longitude, a latitude, and a vehicle heading of the sample vehicle.

The vehicle heading may be an angle at which the front of the vehicle deviates from a preset direction. For example, an angle at which the front of the vehicle deviates from a true north direction clockwise may be used as the vehicle heading.

In a process of determining the third location information of the sample vehicle based on the sample driving information, some intermediate variables, namely, the second intermediate variable, may be further obtained.

In some embodiments, the third location information and the second intermediate variable may be obtained based on the sample driving information and the map information. The second intermediate variable includes information about an error between lane information determined based on the sample driving information and lane information of the sample vehicle in the map information.

For example, the second intermediate variable may include the following two categories:

(1) an intermediate variable obtained based on the high-definition map and information captured by the visual sensor, for example, a difference between a lane width provided by the sensor and a lane width in the map, a distance of lane line optimization, an initial optimization error, and a final optimization error; and

(2) an intermediate variable obtained based on the high-definition map and information captured by the GNSS sensor and the visual sensor, for example, a probability that a positioning point is in each lane, a lane with a highest probability of being a positioning point, and whether lane information provided by the GNSS sensor is consistent with lane information provided by the visual sensor.

In some embodiments, the second intermediate variable may further include at least one of a covariance of an optimization algorithm used for determining the third location information and a statistical value of the sample driving information in a second time period.

For example, the second intermediate variable may further include the following two categories:

(3) a covariance of an optimization algorithm, for example, a speed covariance, a covariance of an IMU sensor deviation, and a covariance of an estimated attitude (for example, an estimated longitude, latitude, and vehicle heading of the vehicle); and

(4) a statistical value of a parameter captured by a statistics sensor within a period of time, for example, a statistical value of information captured by the GNSS sensor within 20s, a mean and a variance of a vehicle speed within 1s, a mean and a variance of acceleration values in the x-axis, y-axis, and z-axis directions of the accelerometer and a mean and a variance of angular velocity values in the x-axis, y-axis, and z-axis directions of the gyroscope within 10s, and a distance between a location of the last positioning point that is obtained by the GNSS sensor and a positioning result.

In (1), the distance of lane line optimization may be a distance at which a lane line obtained through visual positioning is optimized when the lane line, obtained through visual positioning, of a lane in which the vehicle is located is aligned with a lane line, in the high-definition map, of the lane in which the vehicle is located. The initial optimization error may be an error between the lane line, obtained through visual positioning, of the lane in which the vehicle is located and the lane line, in the high-definition map, of the lane in which the vehicle is located before the alignment. The final optimization error may be an error between the lane line, obtained through visual positioning, of the lane in which the vehicle is located and the lane line, in the high-definition map, of the lane in which the vehicle is located after the alignment.

In (2), the GNSS sensor may perform high-precision positioning by using the RTK carrier-phase differential technology to obtain a probability that a positioning point for the vehicle is in each lane, and a lane with a highest probability of being a positioning point may be determined as a lane in which the vehicle is located. Based on an optimization result in (1), the visual sensor can also further obtain a probability that a positioning point for the vehicle is in each lane, and a lane with a highest probability of being a positioning point is determined as a lane in which the vehicle is located.

In (3), different optimization algorithms and different optimization objectives may be used. This is not limited in this disclosure. For example, the optimization algorithm may be an optimization algorithm based on an overall optimization form, for example, optimization is performed by using information captured by all sensors within a period of time; or the optimization algorithm may be an optimization algorithm based on a filter form, for example, optimization is performed by using information captured by a sensor at an earlier time point and a later time point.

In (4), the statistical value of the information captured by the GNSS sensor within 20s includes but is not limited to an effective ratio, a fixed ratio, a mean and a variance of precision values, a mean and a variance of DOP values, precision and a DOP value of the last GNSS positioning point, whether positioning is fixed, and whether positioning is effective.

The effective ratio may be a ratio of effective positioning by the GNSS sensor to all positioning by the GNSS sensor. The fixed ratio may be a ratio of fixed solutions in positioning results obtained by the GNSS sensor to all positioning results.

For example, the information statistics module 303 in FIG. 3 may collect statistics on statistical values of parameters that are provided by the vehicle information capture module 301 within a period of time to obtain the statistical value in (4). This is not limited in this disclosure. After obtaining the statistical value, the information statistics module 303 may transmit the statistical value to the real-time positioning module 302, or transmit the statistical value to the modeling module 305.

230: Obtain second sample location information of the sample vehicle in the first time period from a positioning device.

In an embodiment, the second sample location information may refer to a fourth location information. For example, the positioning device may be the true-value capture module 304 in FIG. 3, and may be disposed on the sample vehicle. Correspondingly, the fourth location information may also be referred to as true-value location information. To be specific, the fourth location information may be considered as a real location of the sample vehicle. This is not limited in this disclosure.

The positioning device may have high positioning precision, for example, may be SPAN-ISA-100C, SPAN-CPT, or another device. Usually, higher precision of the used positioning device indicates better effect of positioning precision estimation.

In some embodiments, the fourth location information may include a longitude, a latitude, and a vehicle heading of the sample vehicle.

240: Determine a training sample set including a training sample, the training sample including the first sample location information, the second sample location information, and the sample intermediate variable.

Based on the above, the training sample may include the third location information, the fourth location information, and the second intermediate variable. For example, the modeling unit 305 in FIG. 3 may determine the training sample set. The training sample set may include a large number of training samples, and each training sample may include the third location information and the second intermediate variable that are obtained in step 220 and the fourth location information in step 230.

Different vehicles have different operational design domains (ODDs). For example, an autonomous vehicle may have a control system designed for driving in an urban environment and another control system designed for driving on a highway. Therefore, a large amount of data needs to be captured in different scenarios. For example, at least highways, urban expressways, urban ordinary roads, and highway or urban tunnel sections need to be covered.

In embodiments of this disclosure, a large amount of data generated during driving of the sample vehicle may be captured in different scenarios to generate the training sample set. For example, in a sufficiently large number of road sections such as highways, urban expressways, and urban ordinary roads, driving information of the sample vehicle during driving may be captured by the sensor, and location information of the sample vehicle during driving may be captured by the positioning device. In an example, data for a distance of at least 5000 kilometers or more than 10,000 kilometers may be captured in each scenario.

In a possible implementation, during determining of the training sample set, a positioning result (for example, the third location information) obtained by the real-time positioning module 302 and a positioning result (for example, the fourth location information) obtained by the true-value capture module 304 may be aligned according to time, and all intermediate variables of the real-time positioning module 302 are extracted. In an example, one training sample may be generated at one time point. To be specific, each training sample may include a positioning result obtained by the real-time positioning module 302, a positioning result obtained by the true-value capture module 304, and an intermediate variable of the real-time positioning module 302 at a corresponding time point.

In some embodiments, for tunnel sections, tunnel section simulation may be performed based on data of the sample vehicle that is captured in a normal road section (to be specific, a road section without a tunnel) to obtain a training sample data corresponding to the tunnel sections.

Specifically, in a tunnel section, data captured by the GNSS sensor cannot be obtained because a GNSS signal is blocked. A cumulative error caused by derivation only based on another sensor such as the IMU sensor cannot meet a precision requirement, and precision of location information captured by the positioning device in the tunnel section decreases.

An autonomous driving or remote driving technology only requires that high positioning precision be kept within a period of time or a distance after a vehicle enters a tunnel section. Therefore, a part of a file captured by the GNSS sensor may be manually set to be ineffective to simulate a tunnel section. Correspondingly, a road section corresponding to the ineffective part in the file captured by the GNSS sensor may be considered as a tunnel section. In this way, a training sample data corresponding to the tunnel section is obtained. In addition, the fourth location information of the sample vehicle, in the training sample, that is captured by the positioning device has sufficiently high precision compared with location information captured by a positioning device in a real tunnel.

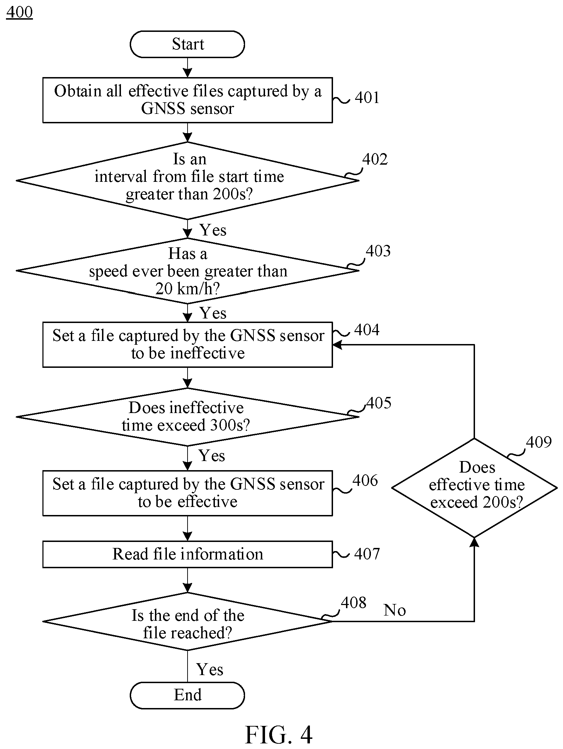

FIG. 4 is a schematic flowchart of a method 400 for obtaining training sample data corresponding to a tunnel section. In the method 400, driving information of a sample vehicle that is captured by a GNSS sensor may be periodically set to be ineffective and effective according to time to generate training sample data corresponding to a tunnel section.

It is to be understood that FIG. 4 shows steps or operations of the method for obtaining a training sample set corresponding to a tunnel section, but these steps or operations are only examples, and other operations or variants of the operations in the figure may alternatively be performed in embodiments of this disclosure. In addition, the steps in FIG. 4 may be performed in an order different from that shown in the figure, and not all of the operations in the figure need to be performed.

As shown in FIG. 4, the method 400 includes steps 401 to 409.

401: Obtain all effective files captured by the GNSS sensor.

For example, in a road test stage, driving information of the sample vehicle that is captured by the sensor within a distance in a scenario without a tunnel may be obtained. The vehicle driving information captured by the GNSS sensor may be stored in a form of a file.

402: Is an interval from file start time greater than 200s?

The file start time may be time at which the sample vehicle starts to travel, to be specific, the GNSS sensor starts to capture driving information of the vehicle. In the case of determining that the interval from the file start time is greater than 200s, obtained training sample data for a simulated tunnel can include driving information of the sample vehicle that is captured by the GNSS sensor within 200s before the sample vehicle enters the tunnel.

403: Has a speed ever been greater than 20 km/h?

In the case of determining that the speed has ever been greater than 20 km/h, it can be ensured that the vehicle is in a normal driving state, to ensure that vehicle driving information obtained by the sensor is meaningful.

404: Set a file captured by the GNSS sensor to be ineffective.

In some embodiments, in the case of setting the file captured by the GNSS sensor to be ineffective, information in a file formed based on vehicle driving information captured by sensors (for example, an IMU sensor, a visual sensor, and a speed sensor) other than the GNSS sensor on the sample vehicle may be further read, and location information of the sample vehicle that is captured by a positioning device may be obtained.

405: Does ineffective time exceed 300s?

The ineffective time being 300s is equivalent to driving time on the simulated tunnel section being 300s. In a case that the ineffective time exceeds 300s, step 406 is performed next.

406: Set a file captured by the GNSS sensor to be effective.

It is to be understood that setting the file captured by the GNSS sensor to be effective in a case that the ineffective time exceeds 300s is equivalent to simulating a scenario in which the vehicle travels in a normal road section after leaving the tunnel section.

407: Read file information.

Corresponding to the scenario in which the sample vehicle travels in the normal road section, information in a file formed based on driving information of the sample vehicle that is captured by the GNSS sensor and other sensors on the vehicle and location information of the sample vehicle that is captured by the positioning device may be read.

408. Is the end of the file reached?

In a case that the end of the file is reached, the process ends. In a case that the end of the file is not reached, step 409 is performed next.

409: Does effective time exceed 200s?

In a case that the effective time exceeds 200s, step 404 is performed next, to continue to set the file captured by the GNSS sensor to be ineffective. In this way, the file of the GNSS sensor by be periodically (namely, alternately) set to be ineffective for 300s and effective for 200s, to generate each piece of data for the sample vehicle in the tunnel section based on data of the sample vehicle that is captured in the normal section.

Usually, after an autonomous vehicle enters a tunnel section, a driver may take over the autonomous vehicle. Therefore, in the tunnel section, driving information of the vehicle that is captured by a sensor within a period of time (for example, 200s) or a distance before the vehicle enters a tunnel is most concerned. Based on this, the file of the GNSS sensor may be periodically set to be ineffective for 300s and effective for 200s to generate each piece of data for the sample vehicle in the tunnel section.

It is to be understood that the time of 200s and 300s and the speed of 20km/h are specific examples for ease of understanding solutions in embodiments of this disclosure, and the time or speed values may alternatively be replaced with other values. Embodiments of this disclosure are not limited thereto.

Therefore, in embodiments of this disclosure, the file captured by the GNSS sensor can be periodically set to be ineffective and effective according to time, to simulate a tunnel section and generate data corresponding to the tunnel section for the sample vehicle. To be specific, a road section corresponding to an ineffective part in the file captured by the GNSS sensor may be considered as a tunnel section. In this way, a training sample set corresponding to the tunnel section is obtained, and sufficiently high precision of location information, in the training sample set, captured by the positioning device can be ensured.

250: Train an initial machine learning model based on the training sample set to obtain the third precision-error estimation model.

For example, the modeling unit 305 in FIG. 3 may train the precision-error estimation model 307 based on the training sample set. For example, the modeling unit 305 may input a training sample to the precision-error estimation model 307 to update a parameter of the precision-error estimation model 307.

In some embodiments, different precision-error estimation models may be trained for different scenarios, to achieve optimal precision-error estimation effect in the scenarios. For example, the following three scenarios may be included:

scenario 1: a non-tunnel scenario + a map scenario;

scenario 2: a tunnel scenario + a map scenario; and

scenario 3: a non-tunnel scenario + a mapless scenario.

For example, the map may be a high-definition map. This is not limited in this disclosure.

In the scenario 1, the GNSS sensor is effective, and vehicle driving information captured by the sensor may be combined with map information for real-time positioning.

In the scenario 1, the precision-error estimation model may be a first precision-error estimation model. Third location information and a second intermediate variable in a training sample corresponding to the first precision-error estimation model are determined based on the sample driving information and the map information (for example, the high-definition map). The sample driving information is captured by the GNSS sensor. The second intermediate variable includes information about an error between lane information determined based on the sample driving information and lane information of the sample vehicle in the map information.

In a specific example, in the training sample for the first precision-error estimation model, the second intermediate variable may include four categories of intermediate variables in step 220: (1) an intermediate variable obtained based on the high-definition map and information captured by the visual sensor; (2) an intermediate variable obtained based on the high-definition map and information captured by the GNSS sensor and the visual sensor; (3) a covariance of an optimization algorithm; and (4) a statistical value of a parameter captured by a statistics sensor within a period of time.

In the scenario 2, the GNSS sensor fails, and vehicle driving information captured by sensors other than the GNSS sensor may be combined with map information for real-time positioning.

In the scenario 2, the precision-error estimation model may be a second precision-error estimation model. Third location information and a second intermediate variable in a training sample corresponding to the second precision-error estimation model are determined based on an effective part of the sample driving information and the map information (for example, the high-definition map). A part of driving information, captured by the GNSS sensor, of the sample vehicle in the sample driving information is set to be ineffective. The second intermediate variable includes information about an error between lane information determined based on the sample driving information and lane information of the sample vehicle in the map information.

In some embodiments, the driving information, captured by the GNSS sensor, of the sample vehicle in the sample driving information is periodically set to be ineffective and effective according to time.

Specifically, for a manner of setting the driving information of the sample vehicle that is captured by the GNSS sensor to be ineffective, refer to the descriptions in step 240. Details are not described herein again.

In a specific example, in the training sample for the second precision-error estimation model, the second intermediate variable may include three categories of intermediate variables in step 220: (1) an intermediate variable obtained based on the high-definition map and information captured by the visual sensor; (3) a covariance of an optimization algorithm; and (4) a statistical value of a parameter captured by a statistics sensor within a period of time (not including a parameter captured by the GNSS sensor). For example, the statistical value in (4) may be a mean and a variance of a vehicle speed within 1s, or a mean and a variance of acceleration values in the x-axis, y-axis, and z-axis directions of the accelerometer and a mean and a variance of angular velocity values in the x-axis, y-axis, and z-axis directions of the gyroscope within 10s.

In the scenario 3, the GNSS sensor is effective, but no map information is available. Therefore, vehicle driving information captured by the sensor cannot be combined with map information for real-time positioning.

In the scenario 3, the precision-error estimation model may be a third precision-error estimation model. Third location information and a second intermediate variable in a training sample corresponding to the third precision-error estimation model are determined based on the sample driving information. The sample driving information is captured by the GNSS sensor.

In a specific example, in the training sample for the third precision-error estimation model, the second intermediate variable may include two categories of intermediate variables in step 220: (3) a covariance of an optimization algorithm; and (4) a statistical value of a parameter captured by a sensor within a period of time.

After the training sample sets are prepared for the foregoing scenarios, modeling may be performed for the foregoing scenarios. To be specific, a precision-error estimation model for each scenario is trained based on a training sample set corresponding to the scenario. The precision-error estimation model may be initialized as a machine learning model, for example, a random forest model, an xgboost model, or a deep neural network model. This is not limited.

An example of a set of algorithm configurations in a case that the precision-error estimation model is the xgboost model is shown below:

Number of samples: 300,000

'booster': 'gbtree'

'objective': 'reg:gamma' or 'reg:squarederror'

'gamma': 0.1,

'max_depth': 6,

'lambda': 3,

'subsample': 0.7,

'colsample_bytree': 0.7,

'min_child_weight': 3,

'silent': 1,

'eta': 0.1

For example, third location information, fourth location information, and a second intermediate variable in a training sample for each scenario may be input to a precision-error estimation model corresponding to the scenario. The precision-error estimation model may obtain fifth location information of the sample vehicle and a precision error of the third location information based on the third location information and the second intermediate variable. The precision error may be an error of the third location information relative to the fifth location information. This is not limited in this disclosure.

In some embodiments, a first loss of a model may be determined based on the fifth location information and the fourth location information during model training. In some embodiments, a second loss of a model may be determined based on a precision error of the third location information relative to the fifth location information and a precision error of the third location information relative to the fourth location information during model training. Then a parameter of the precision-error estimation model may be updated based on at least one of the first loss and the second loss.

In some embodiments, the precision error includes at least one of a horizontal distance error, a vertical distance error, and a heading error.

The error of the third location information relative to the fourth location information is used as an example. A component, in a direction perpendicular to a road, that is obtained by decomposing a distance between the third location information and the fourth location information is referred to as the horizontal distance error, and a component, in a direction of the road, that is obtained by decomposing the distance is referred to as the vertical distance error. In an example, a direction of the positioning device (for example, a true-value capture device) may be used as the direction of the road. The direction of the road may also be referred to as a driving direction. This is not limited.

In a case that the fourth location information includes a longitude "lon0", a latitude "lat0", and a vehicle heading "heading0" and the third location information includes a longitude "lon", a latitude "lat", and a vehicle heading "heading", it may be determined that the precision error of the third location information relative to the fourth location information includes a horizontal distance error "disthorizontal", a vertical distance error "distvertical", and a heading error.

The heading error may be a difference between the vehicle heading "heading0" and the vehicle heading "heading", to be specific, "heading0" - "heading".

Calculation processes for the horizontal distance error "disthorizontal" and the vertical distance error "distvertical" are as follows:

First, a distance "dist" between two locations corresponding to the fourth location information and the third location information is calculated. Specifically, the distance may be obtained based on Haversine formulas:

$$\mathrm{dlon} = \mathrm{radians(lon)} - \mathrm{radians(lon0)} \qquad (1)$$

$$\mathrm{dlat} = \mathrm{radians(lat)} - \mathrm{radians(lat0)} \qquad (2)$$

$$\mathrm{dist} = 1000 \cdot r \cdot 2 \cdot \mathrm{asin}\left( \sqrt{\sin\left(\frac{dlat}{2}\right)^2 + \cos(\mathrm{lat}) \cdot \cos(\mathrm{lat0}) \cdot \sin\left(\frac{dlon}{2}\right)^2} \right)$$

$$(3)$$

radians() converts a longitude or a latitude into a radian. r is a mean radius of the Earth, and r=6371.393. asin () is an arcsine operation. sin () Is a sine operation. cos () is a cosine operation.

Then a heading "point_degree" of the two locations corresponding to the fourth location information and the third location information may be calculated. The heading "point_degree" is an angle of a direction formed by the two locations corresponding to the fourth location information and the third location information relative to the positioning device, and a value ranges from 0° to 360°. A calculation process for the heading "point_degree" is as follows:

$$\mathrm{dlon} = \mathrm{radians(lon0)} - \mathrm{radians(lon)} \qquad (4)$$

$$y = \sin(\mathrm{dlon}) \cdot \cos(\mathrm{lat0}) \qquad (5)$$

$$x = \cos(\mathrm{lat}) \cdot \sin(\mathrm{lat0}) - \sin(\mathrm{lat}) \cdot \cos(\mathrm{lat0}) \cdot \cos(\mathrm{dlon}) \qquad (6)$$

$$\mathrm{point\_degree} = (\mathrm{atan2}(y, x) + 360)\%360 \qquad (7)$$

x represents a component of the distance between the two locations corresponding to the fourth location information and the third location information in a direction perpendicular to the positioning device, and y represents a component of the distance in a direction of the positioning device. atan2(y, x) is an arccosine operation, and may return a corresponding angle based on a positive/negative sign of x and y. % represents a modulo operation. dlon in the formulas (5) and (6) may be obtained based on the formula (4).

Finally, the horizontal distance error "disthorizontal" and the vertical distance error "distvertical" may be calculated based on the heading "point_degree". A specific calculation process may be as follows:

$$\theta = |heading0 - point\_degree| \qquad (8)$$

in the case of $\theta \leq 90$:

$$distvertical = dist \cdot \cos\left(\frac{\theta}{180} \cdot \pi\right) \qquad (9)$$

$$disthorizontal = dist \cdot \sin\left(\frac{\theta}{180} \cdot \pi\right) \qquad (10)$$

in the case of $90 < \theta \leq 180$:

$$distvertical = dist \cdot \sin\left(\frac{\theta-90}{180} \cdot \pi\right) \qquad (11)$$

$$disthorizontal = dist \cdot \cos\left(\frac{\theta-90}{180} \cdot \pi\right) \qquad (12)$$

in the case of $180 < \theta \leq 270$:

$$distvertical = dist \cdot \cos\left(\frac{\theta-180}{180} \cdot \pi\right) \qquad (13)$$

$$disthorizontal = dist \cdot \sin\left(\frac{\theta-180}{180} \cdot \pi\right) \qquad (14)$$

in the case of $\theta > 270$:

$$distvertical = dist \cdot \cos\left(\frac{360-\theta}{180} \cdot \pi\right) \qquad (13)$$

$$disthorizontal = dist \cdot \sin\left(\frac{360-\theta}{180} \cdot \pi\right) \qquad (14)$$

For the error of the third location information relative to the fifth location information, refer to the calculation process of the formulas (1) to (14). Details are not described again.

In addition, another type of scenario further exists: a tunnel scenario + a mapless scenario. In this scenario, even a high-precision sensor, for example, the IMU sensor, cannot ensure sufficiently high precision of a positioning result. Therefore, in this scenario, positioning may be set to be unavailable, and positioning precision does not need to be estimated.

Therefore, in embodiments of this disclosure, the third location information of the sample vehicle, the second intermediate variable used in the process of determining the third location information, and the fourth location information of the sample vehicle that is captured by the positioning device are determined based on the driving information of the sample vehicle that is captured by the sensor, to train the precision-error estimation model and obtain a trained precision-error estimation model. In embodiments of this disclosure, the precision-error estimation model integrates location information of a vehicle that is determined based on vehicle driving information captured by a sensor and an intermediate variable used in a process of determining the location information, to estimate a precision error of the location information.

After the precision-error estimation model is obtained through training, the online estimation stage may be performed. The online estimation stage is described below.

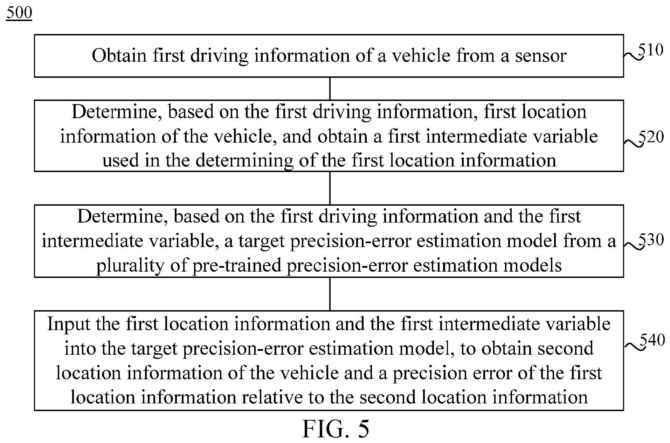

FIG. 5 is a schematic flowchart of a method for estimating positioning precision error 500 according to an embodiment of this disclosure. The method 500 may be performed by any electronic device with a data processing capability. For example, the electronic device may be implemented as a server or a terminal device. For another example, the electronic device may be implemented as the calculation module 109 shown in FIG. 1. This is not limited in this disclosure.

In some embodiments, the electronic device may include a machine learning model (for example, the machine learning model is deployed on the electronic device). The machine learning model may be the precision-error estimation model in the foregoing descriptions. Still as shown in FIG. 3, the vehicle information capture module 301, the real-time positioning module 302, the information statistics module 303, the information determining module 306, the precision-error estimation model 307, and the precision estimation module 308 may be used for estimating positioning precision for a vehicle. The method for estimating positioning precision error 500 is described with reference to FIG. 3.

As shown in FIG. 5, the method 500 includes steps 510 to 540.

510: Obtain first driving information of a vehicle from a sensor.

For example, the vehicle information capture module 301 in FIG. 3 may obtain the first driving information of the vehicle that is captured by the sensor associated with the vehicle. The sensor may capture first driving information of the vehicle in a current time period or a previous time period. This is not limited. After obtaining the first driving information, the vehicle information capture module 301 may transmit the first driving information to the real-time positioning module 302 and the information determining module 306. In some embodiments, the first driving information may be further transmitted to the information statistics module 303.

In some embodiments, the sample driving information includes driving information of the vehicle that is captured by at least one of an inertial measurement unit (IMU) sensor, a vehicle speed sensor, and a visual sensor.

Specifically, the first driving information captured by the sensor is similar to the sample driving information captured by the sensor in step 210 in FIG. 2. Refer to the foregoing descriptions. Details are not described herein again.

520: Determine, based on the first driving information, first location information of the vehicle, and obtain a first intermediate variable used in the determining of the first location information.

For example, the real-time positioning module 302 in FIG. 3 may obtain, based on the first driving information, the first location information of the vehicle and the first intermediate variable used in the process of determining the first location information. After obtaining the first location information and the first intermediate variable, the real-time positioning module 302 may transmit the first location information and the first intermediate variable to the precision-error estimation model 307.

In some embodiments, the first location information includes a longitude, a latitude, and a vehicle heading of the vehicle.

In some embodiments, the first location information and the first intermediate variable may be obtained based on the first driving information and map information. The first intermediate variable includes information about an error between lane information determined based on the first driving information and lane information of the vehicle in the map information.

In some embodiments, the first intermediate variable may include at least one of a covariance of an optimization algorithm used for determining the first location information and a statistical value of the first driving information in a first time period.

For example, the information statistics module 303 in FIG. 3 may collect statistics on statistical values of parameters that are provided by the vehicle information capture module 301 within a period of time to obtain a statistical value for the first driving information in the first time period. After obtaining the statistical value, the information statistics module 303 may transmit the statistical value to the real-time positioning module 302, or transmit the statistical value to the precision-error estimation model 307.

Specifically, the first location information is similar to the third location information in step 220 in FIG. 2, and the first intermediate variable is similar to the second intermediate variable in step 220 in FIG. 2. Refer to the foregoing descriptions. Details are not described herein again.

530: Determine, based on the first driving information and the first intermediate variable, a target precision-error estimation model from a plurality of pre-trained precision-error estimation models, the plurality of pre-trained precision-error estimation models being obtained by training an initial machine learning model based on a training sample set comprising a training sample, the training sample comprising sample location information of a sample vehicle and a sample intermediate variable used in the determining of the sample location information.

Specifically, as described in step 220 and step 230, the training sample set may include third location information and fourth location information of the sample vehicle and a second intermediate variable used in a process of determining the third location information. The third location information is determined based on sample driving information of the sample vehicle that is captured by a sensor in a first time period. The fourth location information includes location information of the sample vehicle that is captured by a positioning device in the first time period. The sample location information may include the third location information and fourth location information, and the sample intermediate variable may refer to the second intermediate variable.

Specifically, for a training process for the precision-error estimation model, refer to the descriptions of FIG. 2. Details are not described herein again.

The pre-trained precision-error estimation model includes a plurality of models respectively trained for different scenarios. The target precision-error estimation model is determined from the pre-trained precision-error estimation model based on the first driving information of the vehicle that is captured by the sensor and the first intermediate variable used in the process of determining the first location information. To be specific, an applicable target precision-error estimation model to be called may be determined based on a specific application scenario.

For example, the information determining module 306 in FIG. 3 may determine the applicable precision-error estimation model to be called based on the first driving information and the first intermediate variable, to be specific, by combining the first driving information and whether map information, for example, a high-definition map, is currently available.

In an example, in a case that the first driving information includes driving information of the vehicle that is captured by a GNSS sensor and map information (for example, a high-definition map) is currently available, a first precision-error estimation model may be further determined as the target precision-error estimation model. To be specific, the first precision-error estimation model in the foregoing scenario 1 is determined.

In another example, in a case that the first driving information does not include driving information of the vehicle that is captured by the GNSS sensor and map information (for example, a high-definition map) is currently available, a second precision-error estimation model may be further determined as the target precision-error estimation model. To be specific, the second precision-error estimation model in the foregoing scenario 2 is determined.

In another example, in a case that the first driving information includes driving information of the vehicle that is captured by the GNSS sensor and no map information (for example, a high-definition map) is currently available, a third precision-error estimation model may be further determined as the target precision-error estimation model. To be specific, the third precision-error estimation model in the foregoing scenario 3 is determined.

Specifically, for the first precision-error estimation model, the second precision-error estimation model, and the third precision-error estimation model, refer to the descriptions of step 250 in FIG. 2. Details are not described herein again.

540: Input the first location information and the first intermediate variable into the target precision-error estimation model, to obtain second location information of the vehicle and a precision error of the first location information relative to the second location information.

For example, still as shown in FIG. 3, after the information determining module 306 determines an applicable target precision-error estimation model to be called by combining the first driving information of the vehicle that is obtained by the sensor in the vehicle information capture module 301 and whether map information, for example, a high-definition map, is currently available, the real-time positioning module 302 and the information statistics module 303 may transmit, to the target precision-error estimation model, a related feature that needs to be input to the target precision-error estimation model.

For example, in the case of calling the first precision-error estimation model, the first intermediate variable may include the following intermediate variables used in the process of determining the first location information: (1) an intermediate variable obtained based on the high-definition map and information captured by the visual sensor; (2) an intermediate variable obtained based on the high-definition map and information captured by the GNSS sensor and the visual sensor; (3) a covariance of an optimization algorithm; and (4) a statistical value of a parameter captured by a statistics sensor within a period of time.

For another example, in the case of calling the second precision-error estimation model, the first intermediate variable may include the following intermediate variables used in the process of determining the first location information: (1) an intermediate variable obtained based on the high-definition map and information captured by the visual sensor; (3) a covariance of an optimization algorithm; and (4) a statistical value of a parameter captured by a statistics sensor within a period of time (not including a parameter captured by the GNSS sensor).

For another example, in the case of calling the third precision-error estimation model, the first intermediate variable may include the following intermediate variables used in the process of determining the first location information: (3) a covariance of an optimization algorithm; and (4) a statistical value of a parameter captured by a sensor within a period of time.

After a related feature is input to the first precision-error estimation model, the second precision-error estimation model, or the third precision-error estimation model, the model may output predicted second location information of the vehicle and a precision error of the first location information relative to the second location information.

The second location information may be location information of the vehicle that is to be captured by the positioning device as predicted by the precision-error estimation model, or real location information of the vehicle that is predicted by the precision-error estimation model. This is not limited. For example, the second location information includes a longitude, a latitude, and a vehicle heading of the vehicle.

For example, based on positioning location information of the vehicle that is determined based on the driving information of the vehicle captured by the sensor and an intermediate variable used in a process of determining the positioning location information, the target precision-error estimation model can predict real location information of the vehicle that is captured by the positioning device, and estimate a precision error of the positioning location information relative to the real location information.

Therefore, in embodiments of this disclosure, the first location information of the vehicle and the first intermediate variable used in the process of determining the first location information can be obtained based on the first driving information, and then the target precision-error estimation model is determined from the pre-trained precision-error estimation model based on the first driving information and the first intermediate variable, and the first location information and the first intermediate variable are input to the target precision-error estimation model to obtain the second location information of the vehicle and the precision error of the first location information relative to the second location information. In this way, a precision error of high-precision positioning can be effectively assessed.

Compared with conventional covariance optimization, both cep90 and a mean of precision errors are greatly improved in the method for estimating positioning precision error in embodiments of this disclosure. In other words, the values of precision error are more compact and less divergent or scattered. The cep90 is value at a 90% place among all precision errors sorted in ascending order. For example, comparison is performed based on data sets generated for different road sections within approximately 2 to 3 hours per day within 20 days. A mean of precision errors determined in embodiments of this disclosure is improved by approximately 0.5 m on average compared with the covariance-based method.

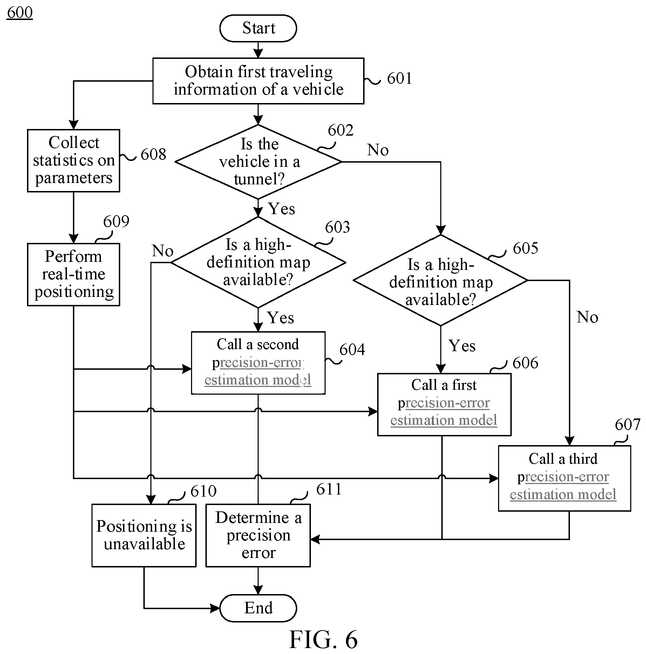

FIG. 6 shows a specific example of a method for estimating positioning precision error 600 according to an embodiment of this disclosure. The method 600 may be performed by any electronic device with a data processing capability. For example, the electronic device may be implemented as a server or a terminal device. For another example, the electronic device may be implemented as the calculation module 109 shown in FIG. 1. This is not limited in this disclosure.

It is to be understood that FIG. 6 shows steps or operations of the method for estimating positioning precision error, but these steps or operations are only examples, and other operations or variants of the operations in the figure may alternatively be performed in embodiments of this disclosure. In addition, the steps in FIG. 6 may be performed in an order different from that shown in the figure, and not all of the operations in FIG. 6 need to be performed.

As shown in FIG. 6, the method 600 includes steps 601 to 610.

601: Obtain first driving information of a vehicle.

Specifically, for step 601, refer to the descriptions in step 510. Details are not described herein again.

602: Is the vehicle in a tunnel?

Specifically, whether the vehicle is located in a tunnel section may be determined based on the first driving information in 601. For example, in a case that the first driving information includes driving information of the vehicle that is captured by a GNSS sensor, it may be determined that the vehicle is not located in a tunnel section; or in a case that the first driving information does not include driving information of the vehicle that is captured by the GNSS sensor, it may be determined that the vehicle is located in a tunnel section.

In a case that the vehicle is located in a tunnel section, step 603 is performed next. In a case that the vehicle is not located in a tunnel section, step 605 is performed next.

603: Is a high-definition map available?

To be specific, in a tunnel scenario, whether a high-definition map is available is further determined. In a case that a high-definition map is available, step 604 is performed next. In a case that no high-definition map is available, step 610 is performed next.

604: Call a second precision-error estimation model.

605: Is a high-definition map available?

To be specific, in a non-tunnel scenario, whether a high-definition map is available is further determined. In a case that a high-definition map is available, step 606 is performed next. In a case that no high-definition map is available, step 607 is performed next.

606: Call a first precision-error estimation model.

607: Call a third precision-error estimation model.

Specifically, for the first precision-error estimation model, the second precision-error estimation model, and the third precision-error estimation model, refer to the descriptions of FIG. 2 and FIG. 5. Details are not described herein again.

608: Collect statistics on parameters.

Specifically, statistics may be collected on driving parameters in the first driving information in step 601 to obtain statistical values of the driving parameters.

609: Perform real-time positioning.

Specifically, first location information of the vehicle may be determined based on the first driving information in step 601 and the statistical values obtained in step 608. A real-time positioning result (namely, the first location information) and an intermediate variable used in a process of determining the first location information may be input to a corresponding precision-error estimation model. Specifically, for parameters that are input to different precision-error estimation models, refer to the descriptions of FIG. 5. Details are not described herein again.

610: Positioning is unavailable.

To be specific, in a case that no high-definition map is available in the tunnel scenario, it is determined that positioning is unavailable.

611: Determine a precision error.

Specifically, precision errors of real-time positioning results in different scenarios may be determined based on results of calling precision-error estimation models in different scenarios.

Therefore, in embodiments of this disclosure, the first location information of the vehicle and the first intermediate variable used in the process of determining the first location information can be obtained based on the first driving information, and then the target precision-error estimation model is determined from the pre-trained precision-error estimation model based on the first driving information and the first intermediate variable, and the first location information and the first intermediate variable are input to the target precision-error estimation model to obtain the second location information of the vehicle and the precision error of the first location information relative to the second location information. In this way, a precision error of high-precision positioning can be effectively assessed.

Specific implementations of this disclosure are described in detail above with reference to the accompanying drawings. However, this disclosure is not limited to specific details in the foregoing implementations, a plurality of simple variations may be made to the technical solutions of this disclosure within a scope of the technical concept of this disclosure, and these simple variations fall within the protection scope of this disclosure. For example, the specific technical features described in the foregoing specific implementations may be combined in any proper manner in a case without conflict. To avoid unnecessary repetition, various possible combinations are not additionally described in this disclosure. For another example, different implementations of this disclosure may also be arbitrarily combined without departing from the idea of this disclosure, and these combinations shall still be regarded as content disclosed in this disclosure.

It is to be understood that, in various method embodiments of this disclosure, an order of sequence numbers of the foregoing processes does not indicate an execution sequence, and an execution sequence of the processes is to be determined based on functions and internal logic thereof and does not constitute any limitation on an implementation process of embodiments of this disclosure. It is to be understood that these sequence numbers are interchangeable where appropriate so that the described embodiments of this disclosure can be implemented in an order other than those illustrated or described.

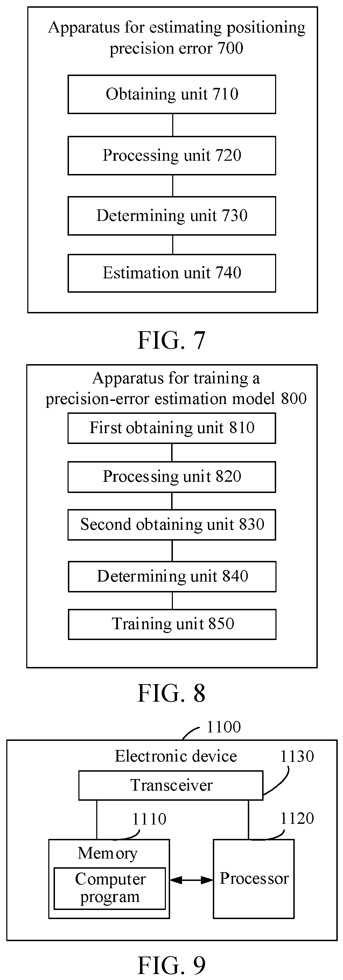

The foregoing describes method embodiments of this disclosure in detail. The following describes apparatus embodiments of this disclosure in detail with reference to FIG. 7 to FIG. 9.

FIG. 7 is a schematic block diagram of an apparatus for estimating positioning precision error 700 according to an embodiment of this disclosure. As shown in FIG. 7, the apparatus for estimating positioning precision error 700 may include an obtaining unit 710, a processing unit 720, a determining unit 730, and an estimation unit 740.

The obtaining unit 710 is configured to obtain first driving information of a vehicle from a sensor.

The processing unit 720 is configured to determine, based on the first driving information, first location information of the vehicle; obtain a first intermediate variable used in the determining of the first location information.

The determining unit 730 is configured to determine, based on the first driving information and the first intermediate variable, a target precision-error estimation model from a plurality of pre-trained precision-error estimation models, the plurality of pre-trained precision-error estimation models being obtained by training an initial machine learning model based on a training sample set comprising a training sample, the training sample comprising sample location information of a sample vehicle and a sample intermediate variable used in the determining of the sample location information.

The estimation unit 740 is configured to input the first location information and the first intermediate variable into the target precision-error estimation model, to obtain second location information of the vehicle and a precision error of the first location information relative to the second location information.

In some embodiments, the processing unit 720 is specifically configured to:
determine the first intermediate variable based on the first driving information and map information, the first intermediate variable comprising information about an error between first lane information determined based on the first driving information and second lane information of the vehicle according to the map information.

In some embodiments, the first driving information includes driving information of the vehicle that is captured by a global navigation satellite system (GNSS) sensor; and
the determining unit 730 is specifically configured to:

determine a first precision-error estimation model as the target precision-error estimation model based on the first driving information and the first intermediate variable, wherein

a first training sample set for training the first precision-error estimation model comprises a first training sample;

the first training sample comprises first sample location information and a first sample intermediate variable that are determined based on first sample driving information of the sample vehicle and the map information;

the first sample driving information is captured by a GNSS sensor.

In some embodiments, the determining unit 730 is specifically configured to:

determine a second precision-error estimation model as the target precision-error estimation model based on the first driving information and the first intermediate variable, wherein

a second training sample set for training the second precision-error estimation model comprises a second training sample;

second sample driving information of the sample vehicle captured by a GNSS sensor comprises an effective part and an ineffective part;

the second training sample comprises second sample location information and a second sample intermediate variable that are determined based on the effective part and the map information.

In some embodiments, the effective part and the ineffective part are periodically configured according to a time period.
In some embodiments, the first driving information is captured by a GNSS sensor; and
the determining unit 730 is specifically configured to:

determining a third precision-error estimation model as the target precision-error estimation model based on the first driving information and the first intermediate variable, wherein

a third training sample set for training the third precision-error estimation model comprises a third training sample;

the third training sample comprises third sample location information and a third sample intermediate variable that are determined based on third sample driving information of the sample vehicle;

the third sample driving information is captured by a GNSS sensor.

In some embodiments, the sample driving information is captured by at least one of an inertial measurement unit (IMU) sensor, a vehicle speed sensor, and a visual sensor.
In some embodiments, the first intermediate variable includes at least one of a covariance of an optimization algorithm used for determining the first location information and a statistical value of the first driving information in a first time period.
In some embodiments, the first location information includes a first longitude, a first latitude, and a first vehicle heading of the vehicle, and the second location information includes a second longitude, a second latitude, and second vehicle heading of the vehicle.
In some embodiments, the precision error includes at least one of a horizontal distance error, a vertical distance error, and a heading error.
It is to be understood that the apparatus embodiments may correspond to the method embodiments. For similar descriptions, refer to the method embodiments. To avoid repetition, details are not described herein again. Specifically, the apparatus for estimating positioning precision error 700 in this embodiment may correspond to a corresponding entity for performing the method 500 or 600 in embodiments of this disclosure, and the foregoing and other operations and/or functions of the modules in the apparatus 700 are respectively intended to implement the corresponding processes in the method 500 or 600. For brevity, details are not described herein again.
FIG. 8 is a schematic block diagram of an apparatus 800 for training a precision-error estimation model according to an embodiment of this disclosure. As shown in FIG. 8, the apparatus 800 for training a precision-error estimation model may include a first obtaining unit 810, a processing unit 820, a second obtaining unit 830, a determining unit 840, and a training unit 850.

The first obtaining unit 810 is configured to obtain sample driving information of a sample vehicle in a first time period from a sensor.

The processing unit 820 is configured to determine, based on the sample driving information, first sample location information of the sample vehicle; obtain a sample intermediate variable used in the determining the first sample location information.

The second obtaining unit 830 is configured to obtain second sample location information of the sample vehicle in the first time period from a positioning device.

The determining unit 840 is configured to determine a training sample set comprising a training sample, the training sample comprising the first sample location information, the second sample location information, and the sample intermediate variable.

The training unit 850 is configured to train an initial machine learning model based on the training sample set to obtain the precision-error estimation model.

In some embodiments, the precision-error estimation model includes a first precision-error estimation model, and the sample driving information is captured by a global navigation satellite system (GNSS) sensor;

the processing unit 820 is specifically configured to: determine the first sample location information and the sample intermediate variable based on the sample driving information and map information, wherein the sample intermediate variable comprises an error between first lane information of the sample vehicle determined based on the sample driving information and second lane information of the sample vehicle determined based on the map information; and

the training unit 850 is specifically configured to train the initial machine learning model based on the training sample set to obtain the first precision-error estimation model.

In some embodiments, the precision-error estimation model includes a second precision-error estimation model, and the sample driving information is captured by a global navigation satellite system (GNSS) sensor;

the processing unit 820 is further configured to: set a part of the sample driving information to be ineffective for simulating a tunnel scenario; and

obtain the first sample location information and the sample intermediate variable based on an effective part of the sample driving information and map information, wherein the sample intermediate variable comprises an error between first lane information of the sample vehicle determined based on the sample driving information and second lane information of the sample vehicle determined based on the map information; and

the training unit is specifically configured to train the initial machine learning model based on the training sample set to obtain the second precision-error estimation model.

In some embodiments, the precision-error estimation model includes a third precision-error estimation model, and the sample driving information is captured by a global navigation satellite system (GNSS) sensor; and the training unit 850 is specifically configured to:
train the initial machine learning model based on the training sample set to obtain the third precision-error estimation model.

In some embodiments, the sample driving information is captured by at least one of an inertial measurement unit (IMU) sensor, a vehicle speed sensor, and a visual sensor.

In some embodiments, the second intermediate variable includes at least one of a covariance of an optimization algorithm used for determining the third location information and a statistical value of the sample driving information in a second time period.

It is to be understood that the apparatus embodiments may correspond to the method embodiments. For similar descriptions, refer to the method embodiments. To avoid repetition, details are not described herein again. Specifically, the model training apparatus 800 in this embodiment may correspond to a corresponding entity for performing the method 200 in embodiments of this disclosure, and the foregoing and other operations and/or functions of the modules in the apparatus 800 are respectively intended to implement the corresponding processes in the method 200. For brevity, details are not described herein again.

The foregoing describes the apparatuses and systems in embodiments of this disclosure from a perspective of functional modules with reference to the accompanying drawings. It is to be understood that the functional modules may be implemented in a form of hardware, or may be implemented by instructions in a form of software, or may be implemented by a combination of hardware and software modules. Specifically, the steps of the method embodiments in embodiments of this disclosure may be performed by an integrated logic circuit in a processor and/or instructions in a form of software, and the steps of the methods disclosed with reference to embodiments of this disclosure may be directly performed by a hardware decoding processor, or may be performed by a combination of hardware and software modules in a decoding processor. In some embodiments, the software module may be located in a mature storage medium in the art, such as a random access memory, a flash memory, a read-only memory, a programmable read-only memory or electrically erasable programmable memory, or a register. The storage medium is located in the memory. The processor reads information in the memory and completes the steps in the method embodiments in combination with hardware thereof.

FIG. 9 is a schematic block diagram of an electronic device 1100 according to an embodiment of this disclosure.

As shown in FIG. 9, the electronic device 1100 may include a memory 1110 and a processor 1120. The memory 1110 is configured to store a computer program, and transmit the program code to the processor 1120. In other words, the processor 1120 may call the computer program from the memory 1110 and run the computer program, to implement the methods in embodiments of this disclosure.

For example, the processor 1120 may be configured to perform the steps in the method 200 according to instructions in the computer program.

In some embodiments of this disclosure, the processor 1120 may include but is not limited to a general-purpose processor, a digital signal processor (DSP), an application-specific integrated circuit (ASIC), a field programmable gate array (FPGA) or another programmable logic device, a discrete gate or transistor logic device, a discrete hardware component, and the like.

In some embodiments of this disclosure, the memory 1110 includes but is not limited to a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and serves as an external cache. By way of example but not limitative description, RAMs in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM).

In some embodiments of this disclosure, the computer program may be divided into one or more modules, and the one or more modules are stored in the memory 1110 and executed by the processor 1120 to perform the methods provided in this disclosure. The one or more modules may be a series of computer program instruction segments capable of performing specific functions, and the instruction segments are used for describing execution processes of the computer program on the electronic device 1100.

In some embodiments, as shown in FIG. 9, the electronic device 1100 may further include a transceiver 1130. The transceiver 1130 may be connected to the processor 1120 or the memory 1110. The processor 1120 may control the transceiver 1130 to communicate with another device, specifically, to transmit information or data to another device, or receive information or data transmitted by another device. The transceiver 1130 may include a transmitter and a receiver. The transceiver 1130 may further include an antenna. There may be one or more antennas.

It is to be understood that components of the electronic device 1100 are connected through a bus system. In addition to a data bus, the bus system further includes a power bus, a control bus, and a status signal bus.

According to an aspect of this disclosure, a communications apparatus is provided and includes a memory and a processor. The memory is configured to store a computer program. The processor is configured to call and run the computer program stored in the memory, so that the encoder performs the methods in the method embodiments.

According to an aspect of this disclosure, a computer storage medium is provided, having a computer program stored therein. When the computer program is executed by a computer, the computer is enabled to perform the methods in the method embodiments. Alternatively, embodiments of this disclosure further provide a computer program product including instructions, and when the instructions are executed by a computer, the computer is enabled to perform the methods in the method embodiments.

According to another aspect of this disclosure, a computer program product or a computer program is provided. The computer program product or the computer program includes computer instructions, and the computer instructions are stored in a computer-readable storage medium. A processor of a computer device reads the computer instructions from the computer-readable storage medium, and the processor executes the computer instructions, so that the computer device performs the methods in the method embodiments.

In other words, when software is used to implement the embodiments, all or some of the embodiments may be implemented in a form of a computer program product. The computer program product includes one or more computer instructions. When the computer program instructions are loaded and executed on a computer, all or some of the processes or functions according to embodiments of this disclosure are produced. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, wireless, or microwave) manner. The computer-readable storage medium may be any usable medium accessible to a computer, or a data storage device, for example, a server or a data center, integrating one or more available media. The available medium may be a magnetic medium (for example, a floppy disk, a hard disk, or a magnetic tape), an optical medium (for example, a digital video disc (DVD)), a semiconductor medium (for example, a solid state disk (SSD)), or the like.

It can be understood that user information and other related data may be used in specific implementations of this disclosure. When the foregoing embodiments of this disclosure are applied to a specific product or technology, user permission or consent is required, and collection, use, and processing of related data need to comply with related laws, regulations, and standards in related countries and regions.

A person of ordinary skill in the art may be aware that the exemplary modules and algorithm steps described with reference to the embodiments disclosed in this specification can be implemented in electronic hardware, or a combination of computer software and electronic hardware. Whether the functions are performed by hardware or software depends on particular applications and design constraints of technical solutions. A person skilled in the art may use different methods to implement the described functions for each particular application, but it is not to be considered that the implementation goes beyond the scope of this disclosure.

In the several embodiments provided in the this disclosure, it is to be understood that the disclosed devices, apparatuses, and methods may be implemented in other manners. For example, the apparatus embodiments described above are merely exemplary. For example, the module division is merely logical function division and may be other division in actual implementation. For example, a plurality of modules or components may be combined or integrated into another system, or some features may be ignored or not performed. In addition, the shown or discussed mutual couplings or direct couplings or communication connections may be implemented through some interfaces. The indirect couplings or communication connections between the apparatuses or modules may be implemented in electronic, mechanical, or other forms.

The modules shown as separate parts may or may not be physically separate, and the parts shown as modules may or may not be physical modules, may be located in one place, or may be distributed on a plurality of network units. Some or all of the modules may be selected according to actual needs to achieve the objectives of the solutions of the embodiments. In addition, functional modules in embodiments of in this disclosure may be integrated into one processing module, or each of the modules may exist alone physically, or two or more modules may be integrated into one module.

The foregoing descriptions are merely specific implementations of this disclosure, but are not intended to limit the protection scope of this disclosure. Therefore, the protection scope of this disclosure shall be subject to the protection scope of the claims.

## Claims

1. A method for estimating a positioning precision error, executable by an electronic device (1100), comprising:

   obtaining (510, 601) first driving information of a vehicle from a sensor;
   determining (520), based on the first driving information, first location information of the vehicle;
   obtaining (520) a first intermediate variable based on the first driving information and map information, the first intermediate variable comprising information about an error between first lane information of the vehicle determined based on the first driving information and second lane information of the vehicle determined according to the map information;
   determining (530, 604, 606, 607), based on the first driving information and the map information being available, a target precision-error estimation model from a plurality of pre-trained precision-error estimation models, the plurality of pre-trained precision-error estimation models being obtained by training an initial machine learning model based on a training sample set comprising a training sample, the training sample comprising sample location information of a sample vehicle and a sample intermediate variable used in the determining of the sample location information; and
   inputting (540) the first location information and the first intermediate variable into the target precision-error estimation model, to obtain second location information of the vehicle and a precision error (611) of the first location information relative to the second location information.

2. The method according to claim 1, wherein the first driving information is captured by a global navigation satellite system, GNSS, sensor; and
   the determining, based on the first driving information and the map information being available, a target precision-error estimation model from a plurality of pre-trained precision-error estimation models comprises:

determining (606) a first precision-error estimation model as the target precision-error estimation model based on the first driving information and the map information being available, wherein

a first training sample set for training the first precision-error estimation model comprises a first training sample;

the first training sample comprises first sample location information and a first sample intermediate variable that are determined based on first sample driving information of the sample vehicle and the map information;

the first sample driving information is captured by the GNSS sensor.

3. The method according to claim 1, wherein the determining, based on the first driving information and the map information being available, a target precision-error estimation model from a plurality of pre-trained precision-error estimation models comprises:

determining (604) a second precision-error estimation model as the target precision-error estimation model based on the first driving information and the map information being available, wherein

a second training sample set for training the second precision-error estimation model comprises a second training sample;

second sample driving information of the sample vehicle captured by a global navigation satellite system, GNSS, sensor comprises an effective part and an ineffective part;

the second training sample comprises second sample location information and a second sample intermediate variable that are determined based on the effective part and the map information;

wherein preferably:

the effective part and the ineffective part are periodically configured according to a time period.

4. The method according to any one of claims 1 to 3, wherein preferably:

the first driving information is captured by at least one of an inertial measurement unit, IMU, sensor, a vehicle speed sensor, and a visual sensor;

or

the first location information comprises a first longitude, a first latitude, and a first vehicle heading of the vehicle, and the second location information comprises a second longitude, a second latitude, and second vehicle heading of the vehicle;

or

the precision error comprises at least one of a horizontal distance error, a vertical distance error, and a heading error.

5. A method for training a precision-error estimation model (307), executable by an electronic device (1100), comprising:

obtaining (210) sample driving information of a sample vehicle in a first time period from a global navigation satellite system, GNSS, sensor;

when the precision-error estimation model (307) comprises a first precision-error estimation model, determining, based on the sample driving information and map information, first sample location information of the sample vehicle and a sample intermediate variable; or

when the precision-error estimation model (307) comprises a second precision-error estimation model, setting a part of the sample driving information to be ineffective for simulating a tunnel scenario, and obtaining the first sample location information and the sample intermediate variable based on an effective part of the sample driving information and the map information;

obtaining (230) second sample location information of the sample vehicle in the first time period from a positioning device;

determining (240) a training sample set comprising a training sample, the training sample comprising the first sample location information, the second sample location information, and the sample intermediate variable; and

training (250) an initial machine learning model based on the training sample set to obtain the precision-error estimation model (307);

wherein the sample intermediate variable comprises an error between first lane information of the sample vehicle determined based on the sample driving information and second lane information of the sample vehicle determined based on the map information.

6. An apparatus (700) for estimating a positioning precision error, comprising:

an obtaining unit (710), configured to obtain first driving information of a vehicle from a sensor;

a processing unit (720), configured to determine, based on the first driving information, first location information of the vehicle; obtain a first intermediate variable based on the first driving information and map information, the first intermediate variable comprising information about an error between first lane information of the vehicle determined based on the first driving information and second lane information of the vehicle determined according to the map information; and

a determining unit (730), configured to determine, based on the first driving information and the map information being available, a target precision-error estimation model from a plurality of pre-trained precision-error estimation models, the plurality of pre-trained precision-error estimation models being obtained by training an initial machine learning model based on a training sample set comprising a training sample, the training sample comprising sample location information of a sample vehicle and a sample intermediate variable used in the determining of the sample location information; and

an estimation unit (740), configured to input the first location information and the first intermediate variable into the target precision-error estimation model, to obtain second location information of the vehicle and a precision error of the first location information relative to the second location information.

7.   An apparatus (800) for training a precision-error estimation model (307), comprising:

a first obtaining unit (810), configured to obtain sample driving information of a sample vehicle in a first time period from a global navigation satellite system, GNSS, sensor;

a processing unit (820), configured to when the precision-error estimation model (307) comprises a first precision-error estimation model, determine, based on the sample driving information and map information, first sample location information of the sample vehicle and a sample intermediate variable; or when the precision-error estimation model (307) comprises a second precision-error estimation model, set a part of the sample driving information to be ineffective for simulating a tunnel scenario, and obtain the first sample location information and the sample intermediate variable based on an effective part of the sample driving information and the map information;

a second obtaining unit (830), configured to obtain second sample location information of the sample vehicle in the first time period from a positioning device;

a determining unit (840), configured to determine a training sample set comprising a training sample, the training sample comprising the first sample location information, the second sample location information, and the sample intermediate variable; and

a training unit (850), configured to train an initial machine learning model based on the training sample set to obtain the precision-error estimation model (307);

wherein the sample intermediate variable comprises an error between first lane information of the sample vehicle determined based on the sample driving information and second lane information of the sample vehicle determined based on the map information.

8.   An electronic device (1100), comprising a processor (1120) and a memory (1110), the memory (1110) storing instructions, and when the processor (1120) executes the instructions, the processor (1120) being enabled to perform the method according to any one of claims 1 to 5.

9.   A computer storage medium for storing a computer program, the computer program being used for performing the method according to any one of claims 1 to 5.

10.  A computer program product, comprising computer program code, when the computer program product is run an electronic device (1100), the electronic device (1100) being enabled to perform the method according to any one of claims 1 to 5.

**Patentansprüche**

1.   Verfahren zur Schätzung eines Positionierungspräzisionsfehlers, ausführbar durch eine elektronische Vorrichtung (1100), umfassend:

Erlangen (510, 601) erster Fahrinformationen eines Fahrzeugs von einem Sensor ;
Bestimmen (520) erster Standortinformationen des Fahrzeugs auf der Grundlage der ersten Fahrinformationen ;
Erlangen (520) einer ersten Zwischenvariablen auf der Grundlage der ersten Fahrinformationen und von Karteninformationen, wobei die erste Zwischenvariable Informationen über einen Fehler zwischen ersten Spurinformationen des Fahrzeugs, die auf der Grundlage der ersten Fahrinformationen bestimmt wurden, und zweiten Spurinformationen des Fahrzeugs, die gemäß den Karteninformationen bestimmt wurden, umfasst ; Bestimmen (530, 604, 606, 607) eines Ziel-Präzisionsfehler-Schätzmodells aus einer Vielzahl vortrainierter Präzisionsfehler-Schätzmodelle auf der Grundlage der ersten Fahrinformationen und der Verfügbarkeit der Karteninformationen, wobei die Vielzahl vortrainierter Präzisionsfehler-Schätzmodelle durch Trainieren eines anfänglichen maschinellen Lernmodells auf der Grundlage eines Trainingssatzes erhalten wird, der eine Trainingsinstanz umfasst, wobei die Trainingsinstanz Standortinformationen eines Probefahrzeugs und eine Probenzwischenvariable umfasst, die bei der Bestimmung der Standortinformationen der Probe verwendet wird ; und

Eingeben (540) der ersten Standortinformationen und der ersten Zwischenvariablen in das Ziel-Präzisionsfehler-Schätzmodell, um zweite Standortinformationen des Fahrzeugs und einen Präzisionsfehler (611) der ersten Standortinformationen bezüglich der zweiten Standortinformationen zu erlangen.

2. Verfahren nach Anspruch 1, bei dem die ersten Fahrinformationen von einem Sensor eines globalen Navigationssatellitensystems, GNSS, erfasst werden ; und

das Bestimmen eines Ziel-Präzisionsfehler-Schätzmodells aus einer Vielzahl vortrainierter Präzisionsfehler-Schätzmodelle auf der Grundlage der ersten Fahrinformationen und der Verfügbarkeit der Karteninformationen umfasst :

Bestimmen (606) eines ersten Präzisionsfehler-Schätzmodells als Ziel-Präzisionsfehler-Schätzmodell auf der Grundlage der ersten Fahrinformationen und der Verfügbarkeit der Karteninformationen,
wobei
ein erster Trainingssatz zum Trainieren des ersten Präzisionsfehler-Schätzmodells eine erste Trainingsinstanz umfasst ;
die erste Trainingsinstanz erste Standortinformationen der Probe und eine erste Probenzwischenvariable umfasst, die auf der Grundlage erster Probefahrinformationen des Probefahrzeugs und der Karteninformationen bestimmt wurden ;
die ersten Probefahrinformationen von einem GNSS-Sensor erfasst werden.

3. Verfahren nach Anspruch 1, bei dem das Bestimmen eines Ziel-Präzisionsfehler-Schätzmodells aus einer Vielzahl vortrainierter Präzisionsfehler-Schätzmodelle auf der Grundlage der ersten Fahrinformationen und der Verfügbarkeit der Karteninformationen umfasst :

Bestimmen (604) eines zweiten Präzisionsfehler-Schätzmodells als Ziel-Präzisionsfehler-Schätzmodell auf der Grundlage der ersten Fahrinformationen und der Verfügbarkeit der Karteninformationen,
wobei
ein zweiter Trainingssatz zum Trainieren des zweiten Präzisionsfehler-Schätzmodells eine zweite Trainingsinstanz umfasst ;
zweite Probefahrinformationen des Probefahrzeugs, die von einem Sensor eines globalen Navigationssatellitensystems, GNSS, erfasst wurden, einen wirksamen Teil und einen unwirksamen Teil umfassen ;
die zweite Trainingsinstanz zweite Standortinformationen der Probe und eine zweite Probenzwischenvariable umfasst, die auf der Grundlage des wirksamen Teils und der Karteninformationen bestimmt wurden ;
wobei vorzugsweise :
der wirksame Teil und der unwirksame Teil gemäß einer Zeitperiode periodisch konfiguriert werden.

4. Verfahren nach einem der Ansprüche 1 bis 3, wobei vorzugsweise :

die ersten Fahrinformationen von mindestens einem einer Messeinheit für Trägheitsmessung, IMU, einem Sensor, einem Fahrzeuggeschwindigkeitssensor und einem visuellen Sensor erfasst werden ;
oder
die ersten Standortinformationen einen ersten Längengrad, einen ersten Breitengrad und eine erste Fahrzeugausrichtung des Fahrzeugs umfassen, und die zweiten Standortinformationen einen zweiten Längengrad, einen zweiten Breitengrad und eine zweite Fahrzeugausrichtung des Fahrzeugs umfassen ;
oder
der Präzisionsfehler mindestens einen eines horizontalen Abstandsfehlers, eines vertikalen Abstandsfehlers und eines Ausrichtungsfehlers umfasst.

5. Verfahren zum Trainieren eines Präzisionsfehler-Schätzmodells (307), ausführbar durch eine elektronische Vorrichtung (1100), umfassend :

Erlangen (210) von Probefahrinformationen eines Probefahrzeugs in einer ersten Zeitperiode von einem Sensor eines globalen Navigationssatellitensystems, GNSS ;

wenn das Präzisionsfehler-Schätzmodell (307) ein erstes Präzisionsfehler-Schätzmodell umfasst, Bestimmen, auf der Grundlage der Probefahrinformationen und von Karteninformationen, erster Standortinformationen der Probe des Probefahrzeugs und einer Probenzwischenvariablen ; oder

wenn das Präzisionsfehler-Schätzmodell (307) ein zweites Präzisionsfehler-Schätzmodell umfasst, Einstellen eines Teils der Probefahrinformationen als unwirksam zur Simulation eines Tunnelszenarios, und Erlangen der ersten Standortinformationen der Probe und der Probenzwischenvariablen auf der Grundlage eines wirksamen Teils der Probefahrinformationen und der Karteninformationen ;

Erlangen (230) zweiter Standortinformationen der Probe des Probefahrzeugs in der ersten Zeitperiode von einer Positionierungsvorrichtung ;

Bestimmen (240) eines Trainingssatzes, der eine Trainingsinstanz umfasst, wobei die Trainingsinstanz die ersten Standortinformationen der Probe, die zweiten Standortinformationen der Probe und die Probenzwischenvariable umfasst ; und

Trainieren (250) eines anfänglichen maschinellen Lernmodells auf der Grundlage des Trainingssatzes, um das Präzisionsfehler-Schätzmodell (307) zu erlangen ;

wobei die Probenzwischenvariable einen Fehler zwischen ersten Spurinformationen des Probefahrzeugs, die auf der Grundlage der Probefahrinformationen bestimmt wurden, und zweiten Spurinformationen des Probefahrzeugs, die auf der Grundlage der Karteninformationen bestimmt wurden, umfasst.

6. Vorrichtung (700) zur Schätzung eines Positionierungspräzisionsfehlers, umfassend :

eine Erlangungseinheit (710), die dazu konfiguriert ist, erste Fahrinformationen eines Fahrzeugs von einem Sensor zu erlangen ;

eine Verarbeitungseinheit (720), die dazu konfiguriert ist, auf der Grundlage der ersten Fahrinformationen erste Standortinformationen des Fahrzeugs zu bestimmen ; eine erste Zwischenvariable auf der Grundlage der ersten Fahrinformationen und von Karteninformationen zu erlangen, wobei die erste Zwischenvariable Informationen über einen Fehler zwischen ersten Spurinformationen des Fahrzeugs, die auf der Grundlage der ersten Fahrinformationen bestimmt wurden, und zweiten Spurinformationen des Fahrzeugs, die gemäß den Karteninformationen bestimmt wurden, umfasst ; und

eine Bestimmungseinheit (730), die dazu konfiguriert ist, auf der Grundlage der ersten Fahrinformationen und der Verfügbarkeit der Karteninformationen ein Ziel-Präzisionsfehler-Schätzmodell aus einer Vielzahl vortrainierter Präzisionsfehler-Schätzmodelle zu bestimmen, wobei die Vielzahl vortrainierter Präzisionsfehler-Schätzmodelle durch Trainieren eines anfänglichen maschinellen Lernmodells auf der Grundlage eines Trainingssatzes erhalten wird, der eine Trainingsinstanz umfasst, wobei die Trainingsinstanz Standortinformationen eines Probefahrzeugs und eine Probenzwischenvariable umfasst, die bei der Bestimmung der Standortinformationen der Probe verwendet wird ; und

eine Schätzungseinheit (740), die dazu konfiguriert ist, die ersten Standortinformationen und die erste Zwischenvariable in das Ziel-Präzisionsfehler-Schätzmodell einzugeben, um zweite Standortinformationen des Fahrzeugs und einen Präzisionsfehler der ersten Standortinformationen bezüglich der zweiten Standortinformationen zu erlangen.

7. Vorrichtung (800) zum Trainieren eines Präzisionsfehler-Schätzmodells (307), umfassend :

eine erste Erlangungseinheit (810), die dazu konfiguriert ist, Probefahrinformationen eines Probefahrzeugs in einer ersten Zeitperiode von einem Sensor eines globalen Navigationssatellitensystems, GNSS, zu erlangen ;

eine Verarbeitungseinheit (820), die dazu konfiguriert ist, wenn das Präzisionsfehler-Schätzmodell (307) ein erstes Präzisionsfehler-Schätzmodell umfasst, auf der Grundlage der Probefahrinformationen und von Karteninformationen erste Standortinformationen der Probe des Probefahrzeugs und eine Probenzwischenvariable zu bestimmen ; oder wenn das Präzisionsfehler-Schätzmodell (307) ein zweites Präzisionsfehler-Schätzmodell umfasst, einen Teil der Probefahrinformationen als unwirksam einzustellen, um ein Tunnelszenario zu simulieren, und die ersten Standortinformationen der Probe und die Probenzwischenvariable auf der Grundlage eines wirksamen Teils der Probefahrinformationen und der Karteninformationen zu erlangen ;

eine zweite Erlangungseinheit (830), die dazu konfiguriert ist, zweite Standortinformationen der Probe des Probefahrzeugs in der ersten Zeitperiode von einer Positionierungsvorrichtung zu erlangen ;

eine Bestimmungseinheit (840), die dazu konfiguriert ist, einen Trainingssatz zu bestimmen, der eine Trainingsinstanz umfasst, wobei die Trainingsinstanz die ersten Standortinformationen der Probe, die zweiten Standortinformationen der Probe und die Probenzwischenvariable umfasst ; und

eine Trainingseinheit (850), die dazu konfiguriert ist, ein anfängliches maschinelles Lernmodell auf der Grundlage des Trainingssatzes zu trainieren, um das Präzisionsfehler-Schätzmodell (307) zu erlangen ;
wobei die Probenzwischenvariable einen Fehler zwischen ersten Spurinformationen des Probefahrzeugs, die auf der Grundlage der Probefahrinformationen bestimmt wurden, und zweiten Spurinformationen des Probefahrzeugs, die auf der Grundlage der Karteninformationen bestimmt wurden, umfasst.

8. Elektronische Vorrichtung (1100), umfassend einen Prozessor (1120) und einen Speicher (1110), wobei der Speicher (1110) Anweisungen speichert, und wenn der Prozessor (1120) die Anweisungen ausführt, der Prozessor (1120) in die Lage versetzt wird, das Verfahren nach einem der Ansprüche 1 bis 5 durchzuführen.

9. Computerlesbares Speichermedium zum Speichern eines Computerprogramms, wobei das Computerprogramm zur Durchführung des Verfahrens nach einem der Ansprüche 1 bis 5 verwendet wird.

10. Computerprogrammprodukt, umfassend Computerprogrammcode, wenn das Computerprogrammprodukt auf einer elektronischen Vorrichtung (1100) ausgeführt wird, wird die elektronische Vorrichtung (1100) in die Lage versetzt, das Verfahren nach einem der Ansprüche 1 bis 5 durchzuführen.

**Revendications**

1. Procédé d'estimation d'une erreur de précision de positionnement, exécutable par un dispositif électronique (1100), comprenant :

l'obtention (510, 601) de premières informations de conduite d'un véhicule à partir d'un capteur ;
la détermination (520), sur la base des premières informations de conduite, de premières informations de localisation du véhicule ;
l'obtention (520) d'une première variable intermédiaire sur la base des premières informations de conduite et d'informations cartographiques, la première variable intermédiaire comprenant des informations sur une erreur entre des premières informations de voie du véhicule déterminées sur la base des premières informations de conduite et des deuxièmes informations de voie du véhicule déterminées conformément aux informations cartographiques ;
la détermination (530, 604, 606, 607), sur la base des premières informations de conduite et de la disponibilité des informations cartographiques, d'un modèle cible d'estimation de l'erreur de précision parmi une pluralité de modèles pré-entraînés d'estimation de l'erreur de précision, la pluralité de modèles pré-entraînés d'estimation de l'erreur de précision étant obtenue par entraînement d'un modèle initial d'apprentissage automatique sur la base d'un ensemble d'échantillons d'entraînement comprenant un échantillon d'entraînement, l'échantillon d'entraînement comprenant des informations de localisation d'un véhicule-échantillon et une variable intermédiaire d'échantillon utilisée dans la détermination des informations de localisation d'échantillon ; et
la saisie (540) des premières informations de localisation et de la première variable intermédiaire dans le modèle cible d'estimation de l'erreur de précision, pour obtenir des deuxièmes informations de localisation du véhicule et une erreur de précision (611) des premières informations de localisation par rapport aux deuxièmes informations de localisation.

2. Procédé selon la revendication 1, dans lequel les premières informations de conduite sont capturées par un capteur d'un système mondial de navigation par satellite, GNSS ; et
la détermination, sur la base des premières informations de conduite et de la disponibilité des informations cartographiques, d'un modèle cible d'estimation de l'erreur de précision parmi une pluralité de modèles pré-entraînés d'estimation de l'erreur de précision comprend :

la détermination (606) d'un premier modèle d'estimation de l'erreur de précision comme modèle cible d'estimation de l'erreur de précision sur la base des premières informations de conduite et de la disponibilité des informations cartographiques,
dans lequel
un premier ensemble d'échantillons d'entraînement destiné à l'entraînement du premier modèle d'estimation de l'erreur de précision comprend un premier échantillon d'entraînement ; le premier échantillon d'entraînement comprend des premières informations de localisation d'échantillon et une première variable intermédiaire d'échantillon déterminées sur la base de premières informations de conduite d'échantillon du véhicule-échantillon et des informations cartographiques ;

les premières informations de conduite d'échantillon sont capturées par un capteur GNSS.

3. Procédé selon la revendication 1, dans lequel la détermination, sur la base des premières informations de conduite et de la disponibilité des informations cartographiques, d'un modèle cible d'estimation de l'erreur de précision parmi une pluralité de modèles pré-entraînés d'estimation de l'erreur de précision comprend :

la détermination (604) d'un deuxième modèle d'estimation de l'erreur de précision comme modèle cible d'estimation de l'erreur de précision sur la base des premières informations de conduite et de la disponibilité des informations cartographiques,
dans lequel
un deuxième ensemble d'échantillons d'entraînement destiné à l'entraînement du deuxième modèle d'estimation de l'erreur de précision comprend un deuxième échantillon d'entraînement ;
des deuxièmes informations de conduite d'échantillon du véhicule-échantillon capturées par un capteur d'un système mondial de navigation par satellite, GNSS, comprennent une partie effective et une partie ineffective ;
le deuxième échantillon d'entraînement comprend des deuxièmes informations de localisation d'échantillon et une deuxième variable intermédiaire d'échantillon déterminées sur la base de la partie effective et des informations cartographiques ;
dans lequel, de préférence :
la partie effective et la partie ineffective sont configurées de manière périodique selon une période de temps.

4. Procédé selon l'une quelconque des revendications 1 à 3, dans lequel, de préférence :

les premières informations de conduite sont capturées par au moins l'un d'un capteur d'unité de mesure inertielle, IMU, d'un capteur de vitesse de véhicule et d'un capteur visuel ;
ou
les premières informations de localisation comprennent une première longitude, une première latitude et un premier cap du véhicule, et les deuxièmes informations de localisation comprennent une deuxième longitude, une deuxième latitude et un deuxième cap du véhicule ;
ou
l'erreur de précision comprend au moins l'une d'une erreur de distance horizontale, d'une erreur de distance verticale et d'une erreur de cap.

5. Procédé d'entraînement d'un modèle d'estimation de l'erreur de précision (307), exécutable par un dispositif électronique (1100), comprenant :

l'obtention (210) d'informations de conduite d'échantillon d'un véhicule-échantillon dans une première période de temps à partir d'un capteur d'un système mondial de navigation par satellite, GNSS ;
lorsque le modèle d'estimation de l'erreur de précision (307) comprend un premier modèle d'estimation de l'erreur de précision, la détermination, sur la base des informations de conduite d'échantillon et d'informations cartographiques, de premières informations de localisation d'échantillon du véhicule-échantillon et d'une variable intermédiaire d'échantillon ; ou
lorsque le modèle d'estimation de l'erreur de précision (307) comprend un deuxième modèle d'estimation de l'erreur de précision, le paramétrage d'une partie des informations de conduite d'échantillon comme ineffective pour simuler un scénario de tunnel, et l'obtention des premières informations de localisation d'échantillon et de la variable intermédiaire d'échantillon sur la base d'une partie effective des informations de conduite d'échantillon et des informations cartographiques ;
l'obtention (230) de deuxièmes informations de localisation d'échantillon du véhicule-échantillon dans la première période de temps à partir d'un dispositif de positionnement ;
la détermination (240) d'un ensemble d'échantillons d'entraînement comprenant un échantillon d'entraînement, l'échantillon d'entraînement comprenant les premières informations de localisation d'échantillon, les deuxièmes informations de localisation d'échantillon et la variable intermédiaire d'échantillon ; et
l'entraînement (250) d'un modèle initial d'apprentissage automatique sur la base de l'ensemble d'échantillons d'entraînement pour obtenir le modèle d'estimation de l'erreur de précision (307) ;
dans lequel la variable intermédiaire d'échantillon comprend une erreur entre des premières informations de voie du véhicule-échantillon déterminées sur la base des informations de conduite d'échantillon et des deuxièmes informations de voie du véhicule-échantillon déterminées sur la base des informations cartographiques.

6. Appareil (700) d'estimation d'une erreur de précision de positionnement, comprenant :

une unité d'obtention (710), configurée pour obtenir des premières informations de conduite d'un véhicule à partir d'un capteur ;

une unité de traitement (720), configurée pour déterminer, sur la base des premières informations de conduite, des premières informations de localisation du véhicule ; obtenir une première variable intermédiaire sur la base des premières informations de conduite et d'informations cartographiques, la première variable intermédiaire comprenant des informations sur une erreur entre des premières informations de voie du véhicule déterminées sur la base des premières informations de conduite et des deuxièmes informations de voie du véhicule déterminées conformément aux informations cartographiques ; et

une unité de détermination (730), configurée pour déterminer, sur la base des premières informations de conduite et de la disponibilité des informations cartographiques, un modèle cible d'estimation de l'erreur de précision parmi une pluralité de modèles pré-entraînés d'estimation de l'erreur de précision, la pluralité de modèles pré-entraînés d'estimation de l'erreur de précision étant obtenue par entraînement d'un modèle initial d'apprentissage automatique sur la base d'un ensemble d'échantillons d'entraînement comprenant un échantillon d'entraînement, l'échantillon d'entraînement comprenant des informations de localisation d'un véhicule-échantillon et une variable intermédiaire d'échantillon utilisée dans la détermination des informations de localisation d'échantillon ; et

une unité d'estimation (740), configurée pour saisir les premières informations de localisation et la première variable intermédiaire dans le modèle cible d'estimation de l'erreur de précision, pour obtenir des deuxièmes informations de localisation du véhicule et une erreur de précision des premières informations de localisation par rapport aux deuxièmes informations de localisation.

**7.** Appareil (800) d'entraînement d'un modèle d'estimation de l'erreur de précision (307), comprenant :

une première unité d'obtention (810), configurée pour obtenir des informations de conduite d'échantillon d'un véhicule-échantillon dans une première période de temps à partir d'un capteur d'un système mondial de navigation par satellite, GNSS ;

une unité de traitement (820), configurée pour, lorsque le modèle d'estimation de l'erreur de précision (307) comprend un premier modèle d'estimation de l'erreur de précision, déterminer, sur la base des informations de conduite d'échantillon et d'informations cartographiques, des premières informations de localisation d'échantillon du véhicule-échantillon et une variable intermédiaire d'échantillon ; ou lorsque le modèle d'estimation de l'erreur de précision (307) comprend un deuxième modèle d'estimation de l'erreur de précision, paramétrer une partie des informations de conduite d'échantillon comme ineffective pour simuler un scénario de tunnel, et obtenir les premières informations de localisation d'échantillon et la variable intermédiaire d'échantillon sur la base d'une partie effective des informations de conduite d'échantillon et des informations cartographiques ;

une deuxième unité d'obtention (830), configurée pour obtenir des deuxièmes informations de localisation d'échantillon du véhicule-échantillon dans la première période de temps à partir d'un dispositif de positionnement ;

une unité de détermination (840), configurée pour déterminer un ensemble d'échantillons d'entraînement comprenant un échantillon d'entraînement, l'échantillon d'entraînement comprenant les premières informations de localisation d'échantillon, les deuxièmes informations de localisation d'échantillon et la variable intermédiaire d'échantillon ; et

une unité d'entraînement (850), configurée pour entraîner un modèle initial d'apprentissage automatique sur la base de l'ensemble d'échantillons d'entraînement pour obtenir le modèle d'estimation de l'erreur de précision (307) ;

dans lequel la variable intermédiaire d'échantillon comprend une erreur entre des premières informations de voie du véhicule-échantillon déterminées sur la base des informations de conduite d'échantillon et des deuxièmes informations de voie du véhicule-échantillon déterminées sur la base des informations cartographiques.

**8.** Dispositif électronique (1100), comprenant un processeur (1120) et une mémoire (1110), la mémoire (1110) stockant des instructions, et lorsque le processeur (1120) exécute les instructions, le processeur (1120) étant apte à exécuter le procédé selon l'une quelconque des revendications 1 à 5.

**9.** Support de stockage informatique destiné à stocker un programme informatique, le programme informatique étant utilisé pour exécuter le procédé selon l'une quelconque des revendications 1 à 5.

**10.** Produit de programme informatique, comprenant un code de programme informatique, lorsque le produit de programme informatique est exécuté sur un dispositif électronique (1100), le dispositif électronique (1100) étant apte à exécuter le procédé selon l'une quelconque des revendications 1 à 5.

FIG. 1

200

| Obtain sample driving information of a sample vehicle in a first time period from a sensor | 210 |

| Determine, based on the sample driving information, first sample location information of the sample vehicle, and obtain a sample intermediate variable used in the determining the first sample location information | 220 |

| Obtain second sample location information of the sample vehicle in the first time period from a positioning device | 230 |

| Determine a training sample set including a training sample, the training sample including the first sample location information, the second sample location information, and the sample intermediate variable | 240 |

| Train an initial machine learning model based on the training sample set to obtain the third precision-error estimation model | 250 |

FIG. 2

True-value capture module 304

Vehicle information capture module 301

Real-time positioning module 302

Information statistics module 303

Modeling module 305

Information determining module 306

Precision-error estimation model 307

FIG. 3

400

```
                    ┌──────────────┐
                    │    Start     │
                    └──────────────┘
                            │
                            ▼
        ┌─────────────────────────────────────┐
        │ Obtain all effective files captured │  ～ 401
        │ by a GNSS sensor                    │
        └─────────────────────────────────────┘
                            │
                            ▼
                    Is an
            interval from file start time           402
              greater than 200s?
                            │ Yes
                            ▼
                      Has a
          speed ever been greater than              403
                    20 km/h?
                            │ Yes
                            ▼
        ┌─────────────────────────────────────┐
        │ Set a file captured by the GNSS     │  ～ 404
        │ sensor to be ineffective            │ ◄──────┐
        └─────────────────────────────────────┘        │
                            │                           │
                            ▼                           │
                  Does ineffective                      │
                  time exceed 300s?        405          │
                            │ Yes                        │
                            ▼                Does        │
        ┌─────────────────────────────────────┐  effective time
        │ Set a file captured by the GNSS     │  exceed 200s?  409
        │ sensor to be effective              │  ～ 406        │
        └─────────────────────────────────────┘               │
                            │                                  │
                            ▼                                  │
        ┌─────────────────────────────────────┐               │
        │ Read file information               │  ～ 407        │
        └─────────────────────────────────────┘               │
                            │                                  │
                            ▼                    408    No     │
                  Is the end of the  ──────────────────────────┘
                  file reached?
                            │ Yes
                            ▼
                    ┌──────────────┐
                    │     End      │
                    └──────────────┘
```

FIG. 4

500

| Obtain first driving information of a vehicle from a sensor | ~510 |

| Determine, based on the first driving information, first location information of the vehicle, and obtain a first intermediate variable used in the determining of the first location information | ~520 |

| Determine, based on the first driving information and the first intermediate variable, a target precision-error estimation model from a plurality of pre-trained precision-error estimation models | ~530 |

| Input the first location information and the first intermediate variable into the target precision-error estimation model, to obtain second location information of the vehicle and a precision error of the first location information relative to the second location information | ~540 |

FIG. 5

600

Start

Obtain first traveling
information of a vehicle          601

Collect
statistics on          608
parameters

Is the
vehicle in a          602          No
tunnel?

Yes

609

Perform
real-time          No          Is a high-          603
positioning          definition map
available?          Is a high-          605
definition map
available?          No

Yes

Call a second          604
precision-error
estimation model          Yes

Call a first          606
precision-error
estimation model

607

Call a third
precision-error
estimation model

610          611

Positioning is          Determine a
unavailable          precision
error

End

FIG. 6

Apparatus for estimating positioning
precision error 700

Obtaining unit 710

Processing unit 720

Determining unit 730

Estimation unit 740

FIG. 7

Apparatus for training a
precision-error estimation model 800

First obtaining unit 810

Processing unit 820

Second obtaining unit 830

Determining unit 840

Training unit 850

FIG. 8

1100

Electronic device   1130

Transceiver

1110   1120

Memory

Computer
program

Processor

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210837512
- US 2020049837 A1
- US 2020111011 A1
- US 2019204092 A1